# EUROPÄISCHE PATENTSCHRIFT

(11) **EP 3 766 719 B1**
(45) Veröffentlichungstag und Bekanntmachung des Hinweises auf die Patenterteilung: **30.08.2023**
(21) Anmeldenummer: 20186498.0
(22) Anmeldetag: 17.07.2020
(51) Int. Cl.: B60L 3/12, B60L 5/00, B60L 50/53, B60M 3/04

(54) **BETREIBEN EINES SCHIENENFAHRZEUGS BEIM PASSIEREN VON TRENNSTELLEN IN EINER FAHRZEUGEXTERNEN STROMVERSORGUNG**
OPERATING A RAILWAY VEHICLE WHEN PASSING SEPARATION POINTS IN A VEHICLE EXTERNAL POWER SUPPLY
FONCTIONNEMENT D'UN VÉHICULE FERROVIAIRE LORS DU PASSAGE DES POINTS DE DÉCONNEXION DANS UNE ALIMENTATION EN COURANT EXTERNE DU VÉHICULE

(30) Priorität: 19.07.2019 DE 102019210770
(43) Veröffentlichungstag der Anmeldung: 20.01.2021
(73) Patentinhaber: Bombardier Transportation GmbH, 10785 Berlin (DE)
(72) Erfinder: Maaß, Jörg-Torsten, 16515 Oranienburg (DE)
(74) Vertreter: Patentanwälte Bressel und Partner mbB

(56) Entgegenhaltungen:
- US-A1- 2012 000 739

## Beschreibung

Die Erfindung betrifft ein Verfahren zum Betreiben eines Schienenfahrzeugs beim Passieren von Trennstellen in einer fahrzeugexternen Stromversorgung und ein Schienenfahrzeug.

Das Versorgen von Schienenfahrzeugen mit elektrischer Energie mittels einer fahrzeugexternen Stromversorgung ist bekannt. Die Stromversorgung kann zum Beispiel eine Stromschiene oder eine Oberleitungsanlage umfassen, an der ein stromführender Fahrdraht montiert ist. Die Schienenfahrzeuge können in ebenfalls bekannter Weise geeignete Stromabnehmer umfassen, zum Beispiel mit einem Pantografen oder einem seitlich montierten Stromschienen-Gegenstücke.

Oftmals erfolgt die Stromversorgung in Form von einphasigem Wechselstrom. Um ein Versorgungsstromnetz (zum Beispiel ein sogenanntes Landesnetz oder allgemein ein öffentliches Stromnetz) möglichst gleichmäßig zu belasten und insbesondere Schieflasten zu vermeiden, ist es bekannt, unterschiedliche Phasen des Versorgungstromnetzes bzw. eines hiervon geführten Wechselstroms an unterschiedliche Abschnitte der fahrzeugexternen Stromversorgung anzuschließen. Anders ausgedrückt können aufeinanderfolgende Abschnitte der Stromversorgung jeweils Wechselstrom mit voneinander unterschiedlichen Phasen führen oder, mit anderen Worten, aus unterschiedlichen Phasen eines typischerweise dreiphasigen Versorgungsstromnetzes gespeist werden. Hierfür werden die Abschnitte von sogenannten Unterwerken an das Versorgungsstromnetz angeschlossen und hieraus mit Strom einer gewünschten Phase versorgt.

Eine typische an der Stromversorgung anliegende Spannung beträgt 25 kV und die Frequenz eines hiervon geführten Wechselstroms beträgt zum Beispiel 50 Hz oder 60 Hz. In Deutschland sind eine Spannung von 15 kV und eine Stromfrequenz von 16,7 Hz verbreitet.

Die Abschnitte der Stromversorgung werden über sogenannte Phasen-Trennstellen elektrisch voneinander getrennt. Eine typische Phasen-Trennstelle zeichnet sich durch das Isolieren einer ersten angrenzenden Stromführungseinrichtung (beispielsweise in Form einer Oberleitung oder Stromschiene) mit einem sogenannten Streckentrenner aus. Anschließend kann ein Oberleitungs- oder Stromschienenabschnitt innerhalb der Trennstelle folgen, der nicht mit einer Spannung versorgt wird und gegebenenfalls sogar geerdet sein kann. Aus diesem Abschnitt kann keine elektrische Energie für einen Antrieb des Schienenfahrzeugs entnommen werden. Es folgt dann wiederum eine Stromführungseinrichtung, die jedoch bevorzugt Strom einer anderen Phase führt und hierfür bevorzugt auch von einem anderen Unterwerk gespeist wird, als die vorangehende Stromführungseinrichtung. Auch eine Speisung aus einem anderen Strompfad desselben Unterwerks ist möglich.

Zusammengefasst kann eine Trennstelle und insbesondere eine Phasen-Trennstelle einen neutralen Abschnitt innerhalb der Stromversorgung definieren, in dem zumindest im Regelfall keine Energieentnahme für ein Antreiben des Schienenfahrzeugs möglich ist.

Es ist aber auch möglich, in Störfällen oder bei einem Sonderbetrieb Trennstellen zumindest vorrübergehend dennoch zu bestromen. Auch ein dynamisches bzw. bedarfsweises Einspeisen von Strom in die Trennstelle während der Durchfahrt eines Schienenfahrzeugs ist möglich. Im Rahmen dieser Erfindung kann jedoch vorgesehen sein, derartige Sonderbetriebe bzw. hierfür ausgelegte Trennstellen nicht zu berücksichtigen und/oder sich auf Trennstellen und insbesondere Phasen-Trennstellen zu fokussieren, die einen neutralen Abschnitt der obigen Art definieren. Sind innerhalb der Stromversorgung auch zumindest selektiv bestrombare Trennstellen vorgesehen, kann jedoch bei diesen Trennstellen gemäß jeglicher der hierin geschilderten Varianten analog zu Trennstellen mit rein neutralen Abschnitten verfahren werden

Die Anmeldung richtet sich besonders auf das Passieren von Phasen-Trennstellen, ist jedoch nicht hierauf beschränkt. So sind auch Trennstellen bekannt, um einen Übergang zwischen unterschiedlichen Spannungs- oder Stromsystemen zu ermöglichen (sog. Systemtrennstellen).

Bisher durchfahren elektrische (d. h. mit elektrischer Energie angetriebene) Schienenfahrzeuge Trennstellen und insbesondere Phasen-Trennstellen mit deaktiviertem Antriebssystem. Ein Stromabnehmer kann zwar in elektrisch leitendem Kontakt mit der Stromversorgung bleiben, es wird aber typischerweise ein sogenannter Hauptschalter deaktiviert und genauer gesagt geöffnet, der diesen Stromabnehmer mit einem Haupttransformator verbindet. Das Öffnen des Hauptschalters ist gleichbedeutend mit einer zumindest teilweisen Deaktivierung des Antriebssystems, da aufgrund der elektrischen Trennung vom Stromabnehmer keine Wandlung einer aufgenommenen elektrischen Energie in Traktionsenergie für das Schienenfahrzeug mehr möglich ist, optional aber weiterhin die Möglichkeit für ein Bremsen unter Mitwirkung von Komponenten des Antriebssystems möglich ist. Zum Beispiel kann ein elektrisches Bremsen mit einem Traktionsmotor durchgeführt werden, der im Generatorbetrieb betrieben wird. Dabei gewonnene elektrische Energie kann beispielsweise dissipiert oder gespeichert werden.

Der Haupttransformator dient in an sich bekannter Weise dazu, die am Stromabnehmer bzw. an einer Primärseite des Haupttransformators anliegende Wechselspannung auf ein gewünschtes Wechselspannungsniveau zu transformieren und typischerweise zu senken. Anschließend kann mittels sogenannter Netzstromrichter die transformierte Wechselspannung in eine Gleichspannung gewandelt werden, die typischerweise an einem Gleichspannungs-Zwischenkreis anliegt. Dieser versorgt verschiedene Verbraucher (zum Beispiel sogenannte Hilfsbetriebe) und/oder die Traktionsmotoren des Schienenfahrzeugs, wofür die Gleichspannung typischerweise wieder von einem Motorstromrichter in eine geeignete Wechselspannung gewandelt wird. Auch die Netzstromrichter werden bei einem Durchfahren einer Trennstelle typischerweise deaktiviert oder gesperrt, um ein instabiles Magnetisieren des Haupttransformators (zum Beispiel ohne stabilisierende Primärspannung) zu vermeiden.

Eine mögliche Schrittfolge beim Durchfahren einer Trennstelle und insbesondere einer Phasen-Trennstelle lautet wie folgt:
- Anzeigen einer vorausliegenden Phasen-Trennstelle mittels eines Lichtsignals, woraufhin ein Fahrer die folgende Abfolge zumindest teilweise manuell durchführt; oder Erkennen einer vorausliegenden Phasen-Trennstelle mittels eines (bevorzugt fahrerautonomen) Schienenfahrzeug-Steuersystems, beispielsweise mittels eines sogenannten ATC-Systems (Automatic Train Control), woraufhin die folgende Abfolge zumindest teilweise automatisch durchgeführt wird;
- Herunterfahren der Traktionsleistung;
- Sperren des/der Netzstromrichter;
- Speisung eines Bordnetzes und/oder Gleichspannungs-Zwischenkreises des Schienenfahrzeugs aus einer anderen Quelle als die externe Stromversorgung. Beispielsweise kann wenigstens ein Traktionsmotor (insbesondere ein Permanentmagnetmotor) des fahrenden Schienenfahrzeugs in einen generatorischen Betriebszustand geschaltet werden, um elektrische Energie zu erzeugen, was auch als Stützbremsbetrieb bezeichnet werden kann. Alternativ kann das Bordnetz bzw. der Gleichspannung-Zwischenkreis elektrisch abgeschaltet werden, wenn diese über eine separate (Hilfsbetriebe-) Wicklung von dem Haupttransformator versorgt werden bzw. hiermit verbunden sind.
- Öffnen des Hauptschalters und Passieren der Trennstelle;
- bei fahrerautonomer Steuerung: Erkennen einer anliegenden Spannung am Stromabnehmer nach Durchfahren der Trennstelle;
- Schließen des Hauptschalters;
- Antakten des/der Netzstromrichter, insbesondere um einen Gleichspannungs-Zwischenkreis gleichmäßig bzw. langsam wieder aufzuladen;
- Hochfahren der Traktionsleistung.

Diese Abfolge ist in mehrfacher Hinsicht nachteilig. Zum einen können Phasen-Trennstellen nicht rechtzeitig erkannt werden, insbesondere wenn dies durch den Fahrzeugführer erfolgen soll. Dies kann in einem Durchfahren der Trennstelle bei geschlossenem Hauptschalter und ohne leichte Rücknahme der Traktionsleistung resultieren, was zu einem Lichtbogen beim Erreichen der Trennstellen führen kann. Dies kann Schäden an der Stromversorgung und insbesondere an einem dortigen Streckentrenner und/oder an dem Fahrzeug verursachen. Defekte Streckentrenner tauchen überproportional häufig in Schadensstatistiken von Schienenfahrzeug-Infrastrukturen auf.

Das häufige Öffnen und Schließen des Hauptschalters führt zudem zu einem frühen Verschleiß dieses Bauteils, was Kosten verursacht.

Ferner führt ein Schließen des Hauptschalters nach dem Passieren der Phasen-Trennstelle und das erneute Verbinden des Haupttransformators mit der Spannung der Stromversorgung zu hohen Einschaltströmen. Dies bedingt hohe Belastungen des Haupttransformators sowie damit verbundener elektrischer Komponenten und erfordert allgemein eine entsprechend robuste und kostspielige Auslegung der Bauteile, die durch etwaige Einschaltströme (engl.: Inrush-Currents) beeinflusst werden.

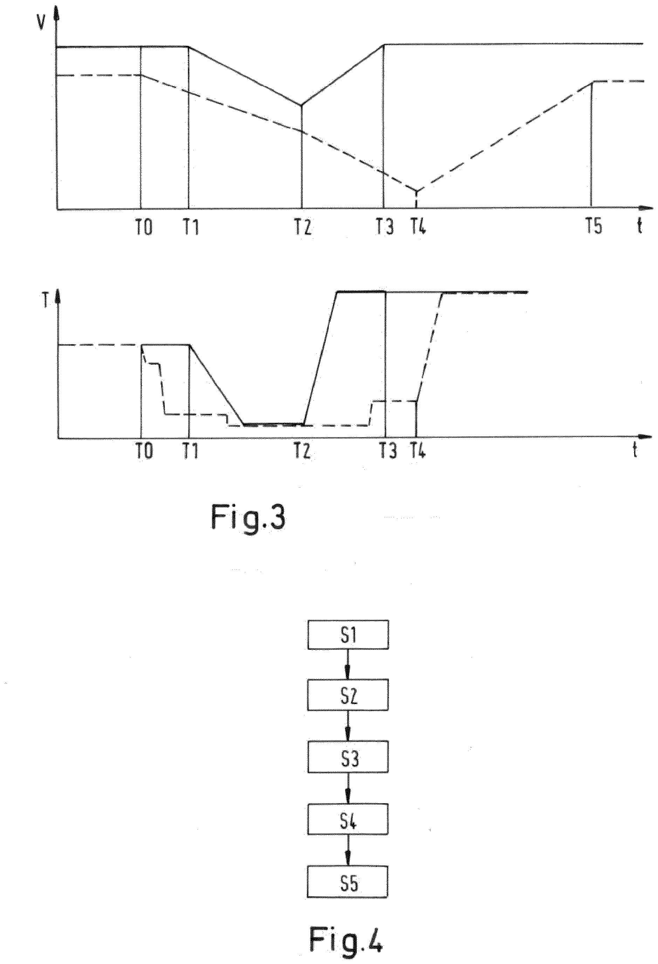

Weiter führt das bisherige Vorgehen zu einem erheblichen Verlust an Fahrdynamik, da das Schienenfahrzeug über einen langen Zeitraum nur passiv (d. h. nicht angetrieben) weiterrollt. Insbesondere bei Hochgeschwindigkeitsstrecken, bei denen zum Beispiel alle 15 bis 20 km Phasen-Trennstellen mit Längen von mehreren 100 m vorliegen können, kann dies zu erheblichen Einbußen der Fahrdynamik führen. Dabei ist zu berücksichtigen, dass die vorstehenden Schritte deutlich mehr Zeit benötigen, als für ein Durchfahren der Trennstelle eigentlich erforderlich ist. Dies resultiert aus dem Zeitbedarf für die durchgeführten Schaltvorgänge und die Ansteuerung der einzelnen Komponenten. Wie nachstehend anhand der Diagramme aus Figur 3 erläutert, muss in diesem Fall nämlich die Traktionsleistung bereits deutlich vor dem Einfahren in eine Trennstelle zurückgefahren werden und kann die Traktionsleistung erst nach einem Ausfahren aus der Trennstelle wieder zu ihrem ursprünglichen Wert zurückkehren. In der Folge treten deutliche Geschwindigkeitsverluste auf.

Ferner kann der Passagierkomfort leiden, wenn das Bordnetz bzw. etwaige Hilfsbetriebe, wie z.B. eine Fahrzeugklimatisierung oder Innenraumbeleuchtung, vorübergehend ausgeschaltet werden müssen, wenn sie nicht mehr vom abgeschalteten Haupttransformators gespeist werden können. Dies betrifft insbesondere Varianten, bei denen das Bordnetz und/oder die Hilfsbetriebe über eine eigene Sekundärwicklung mit dem Haupttransformator verbunden sind zum Beispiel nicht über einen Gleichspannungs-Zwischenkreis.

Aus der US 2012/000739 A1 ist ein Schienenfahrzeug mit einem in Kontakt mit einem Fahrdraht stehenden Stromabnehmer bekannt. Um unerwünschte Einschaltströme in einem Haupttransformator zu vermeiden, kann eine Spannung des Haupttransformators an diejenige des Fahrdrahts angeglichen werden und kann erst anschließend der Stromabnehmer den Kontakt zum Fahrdraht herstellen. Dies kann auch beim Passieren von Trennstellen oder allgemein dem Einfahren in Stromversorgungsabschnitte mit abweichenden Spannungen erfolgen.

Eine Aufgabe der vorliegenden Erfindung ist es daher, zumindest einige der vorstehenden Nachteile zu vermeiden.

Diese Aufgabe wird durch ein Verfahren und ein Schienenfahrzeug mit den Merkmalen der beigefügten unabhängigen Ansprüche gelöst. Vorteilhafte Weiterbildungen sind in den abhängigen Ansprüchen angegeben. Weiter versteht es sich, dass sämtliche der einleitenden Bemerkungen und Merkmale auch bei der vorliegenden Lösung vorgesehen sein bzw. auf diese zutreffen können, sofern nicht anders angegeben oder ersichtlich.

Die Erfindung sieht allgemein vor, den Haupttransformator beim Passieren (d. h. Durchfahren) einer Phasen-Trennstelle nicht vollständig abzuschalten, d. h. nicht vollständig von einer Spannungsversorgung zu trennen. Stattdessen wird vorgeschlagen, an eine Sekundärseite des Haupttransformators eine Wechselspannung anzulegen, dadurch gekennzeichnet, dass während des Passierens der Phasen-Trennstelle ein weiterer Stromrichter als Gleichrichter betrieben und von dem Haupttransformator mit elektrischer Energie gespeist wird. Dies hat zur Folge, dass der Haupttransformator zumindest teilweise magnetisiert bleibt, d. h. dort ein Magnetfeld zumindest teilweise aufrechterhalten werden kann, obwohl im Bereich der Trennstelle primärseitig keine oder zumindest nicht die übliche Spannung der fahrzeugexternen Stromversorgung anliegt.

Vorteilhaft ist dies zunächst dahingehend, als dass Einschaltströme beim Wiederverbinden des Haupttransformators mit der Spannung der Stromversorgung nach dem Durchfahren der Trennstelle begrenzt werden können.

Weiter wird hierdurch die Möglichkeit geschaffen, eine Phasenlage an der Primärseite geeignet zu beeinflussen und insbesondere mit einer erwarteten oder gemessenen Phasenlage des nachfolgenden spannungsführenden Abschnitts der Stromversorgung zu synchronisieren. Je weiter das Ausmaß der Synchronisierung, desto geringer fallen Ausgleichsströme aus, wenn an dem Haupttransformator nach Durchfahren der Trennstelle primärseitig wieder die Spannung der Stromversorgung anliegt.

Durch Verringern von Ausgleichsströmen wird der Haupttransformator weniger belastet und wird die Gefahr von Schutzabschaltungen verhindert, welche wiederum die Fahrdynamik oder allgemein den gewünschten Fahrzeugbetrieb gefährden.

Allgemein kann vorgesehen sein, die Traktionsleistung zu reduzieren, sodass diese während des Passierens einer Trennstelle vorübergehend einen geringeren Wert einnimmt, als in darauffolgenden und/oder vormals durchfahrenen (gespeisten) Abschnitten der Stromversorgung. Das Reduzieren der Traktionsleistung kann in Vorbereitung auf eine vorausliegende Trennstelle bereits vorzeitig eingeleitet werden. Optional kann die Traktionsleistung aber erst nach dem Verlassen der Trennstelle wieder erhöht werden. Durch Reduzieren der Traktionsleistung, die allgemein auch auf einen Wert von Null reduziert werden kann, kann die Gefahr des Ausbildens von Lichtbögen beim Einfahren in eine Phasen-Trennstelle reduziert werden, insbesondere auch dann, wenn der Hauptschalter in einem geschlossenen Zustand verbleibt. Eine Höhe der Traktionsleistung kann z.B. über nachstehend erläuterte Motorstromrichter gesteuert werden.

Allgemein können jegliche hierin erwähnten Stromrichter getaktet betrieben werden und/oder nach Art einer Pulsweitenmodulation durch schnelle Schaltfolgen z.B. eine Einhüllende als (Grundwelle) einer Wechselspannung erzeugen.

Zudem wird durch die vorgeschlagene Lösung das Risiko von internen Resonanzen des Haupttransformators reduziert, die auftreten können, wenn es beim Durchfahren der Trennstelle zu einem primärseitigen Spannungsverlust kommt. Derartige Resonanzen können Beschädigungen des Transformators sowie elektrisch hiermit verbundener Komponenten bewirken. Besonders zuverlässig wird das Resonanzrisiko dann reduziert, wenn gemäß nachstehender Ausführungsformen dem Haupttransformator auch in definierter Weise Energie entnommen wird, d. h. eine dämpfende Belastung auf den Haupttransformator geschaltet wird. Erfindungsgemäß kann dies durch einen Stromrichter erfolgen, der als Gleichrichter betrieben wird und bevorzugt einen Gleichspannungs-Zwischenkreis des Schienenfahrzeugs mit Energie aus dem Haupttransformator speist. Insbesondere das Vermeiden der Einschaltströme und auch eine etwaige Synchronisation mit einer vorausliegenden Phasenlage führen zudem dazu, dass nach dem Durchfahren der Trennstelle deutlich schneller wieder eine Traktionsleistung erzeugt werden kann, als dies bisher der Fall ist. Somit wird die Fahrdynamik verbessert und wird die Dauer ohne Traktionsleistung und ein allgemein daraus resultierender Geschwindigkeitsverlust um bis zu zwei Drittel verringert. Dies wird zusätzlich durch Ausführungsformen verbessert, bei denen der Hauptschalter beim Durchfahren der Trennstelle geschlossen bleibt.

Im Detail wird ein Verfahren zum Betreiben eines Schienenfahrzeugs beim Passieren von Trennstellen in einer fahrzeugexternen Stromversorgung (die zum Beispiel eine Oberleitung oder eine feste Fahrleitung umfasst, zum Beispiel eine oberhalb des Schienenfahrzeugs montierte Stromschiene) mit den Merkmalen des beigefügten Anspruchs 1 vorgeschlagen, wobei das Schienenfahrzeug umfasst:
- wenigstens einen Stromabnehmer zum Aufnehmen elektrischer Energie von (bzw. aus) der Stromversorgung; und
- einen Haupttransformator zum Transformieren der aufgenommenen elektrischen Energie, die an einer Primärseite des Haupttransformators bereitgestellt ist, auf ein gewünschtes Spannungsniveau an einer Sekundärseite des Haupttransformators;
- einen ersten Stromrichter, der wahlweise als Gleichrichter zum Gleichrichten einer von dem Haupttransformator transformierten Spannung für das Versorgen eines Gleichspannungs-Zwischenkreises des Schienenfahrzeugs betreibbar ist oder als Wechselrichter zur elektrischen Energieversorgung des Haupttransformators mit Energie aus dem Gleichspannungs-Zwischenkreis betreibbar ist; und
- einen weiteren Stromrichter, der als Gleichrichter betreibbar und von dem Haupttransformator mit elektrischer Energie speisbar ist;
wobei das Verfahren umfasst:
- Anlegen einer Wechselspannung an der Sekundärseite des Haupttransformators durch den als Wechselrichter betriebenen ersten Stromrichter, während das Schienenfahrzeug eine Trennstelle der Stromversorgung passiert,
dadurch gekennzeichnet, dass
während des Passierens der Trennstelle der weitere Stromrichter als Gleichrichter betrieben und von dem Haupttransformator mit elektrischer Energie gespeist wird.

Es kann also verfahrensgemäß vorgesehen sein, dass in einem ersten Betriebszustand außerhalb von Trennstellen über die spannungsführende Stromversorgung ein führendes Netz an dem Stromabnehmer das Schienenfahrzeug anliegt. Folglich kann elektrische Energie aufgenommen bzw. eingespeist werden, die mittels des Haupttransformators transformiert wird. In einem zweiten Betriebszustand beim Durchfahren einer Trennstelle kann hingegen kein führendes Netz anliegen und folglich auch keine externe Energieversorgung und Transformation erfolgen. Stattdessen kann in diesem Zustand das ausschließlich sekundärseitige Anlegen der Wechselspannung erfolgen.

Das Schienenfahrzeug kann mehrere Einzelfahrzeuge oder Zugteile umfassen, die prinzipiell voneinander entkoppelbar und unabhängig voneinander bewegbar sein können. Zum Beispiel kann das Schienenfahrzeug ein Zug aus und/oder ein Verbund von Einzelfahrzeugen sein. Die hierin offenbarten Komponenten des Schienenfahrzeugs können folglich auf mehrere Einzelfahrzeuge eines solchen Verbundes bzw. Zuges verteilt sein. Bevorzugt ist wenigstens eine Lokomotive und/oder ein Triebwagen von einem solchen Verbund umfasst. Ebenso kann das Schienenfahrzeug aber ein Einzelfahrzeug sein, zum Beispiel eine einzelne Lokomotive oder ein einzelner Triebwagen.

Bei den Trennstellen handelt es sich bevorzugt um Phasen-Trennstellen, die besonders weit verbreitet sind. Die Trennstellen können zumindest in einem störungsfreien Normalbetrieb spannungsfrei und/oder stromfrei sein und folglich neutrale Abschnitte der Stromversorgung bilden. Während dem Passieren einer Trennstelle kann (zumindest im störungsfreien Normalbetrieb) die Energieaufnahme aus dem Stromnetz unterbrochen oder um wenigstens mehr als die Hälfte reduziert sein.

Sofern hierin auf einem Betriebszustand Bezug genommen wird, in dem das Schienenfahrzeug eine Trennstelle passiert oder auch "während das Schienenfahrzeug die Trennstelle passiert" kann hierunter verstanden werden, dass wenigstens ein Abschnitt des Schienenfahrzeugs die Trennstelle passiert bzw. sich darunter befindet. Insbesondere kann ein Stromabnehmer und können bevorzugt sämtliche und/oder der einzige in Kontakt mit der Stromversorgung stehende Stromabnehmer die Trennstelle passieren. Andere Abschnitte und/oder Komponenten des Schienenfahrzeugs, wie zum Beispiel eine nachstehend erläuterte Detektionseinrichtung oder ein vorausfahrender Triebwagen, können sich hingegen bereits außerhalb der Trennstelle befinden.

Wie erwähnt, kann der Stromabnehmer einen Pantografen umfassen.

Bei dem Haupttransformator handelt es sich bevorzugt um einen Transformator, an dessen Primärseite in an sich bekannter Weise eine am Stromabnehmer anliegende und somit von der Stromversorgung geführte Spannung anlegbar ist. Dies gilt insbesondere dann, wenn ein nachstehend erläuterter Hauptschalter zwischen Haupttransformator und Stromabnehmer geschlossen ist.

Weiter ist der Haupttransformator dazu eingerichtet, die von der Stromversorgung geführte Spannung in eine für den Betrieb des Schienenfahrzeugs geeignete Spannung umzuwandeln und insbesondere das Spannungsniveau zu reduzieren.

Unter der Primärseite des Haupttransformators wird hierin diejenige Seite verstanden, an der eine am Stromabnehmer anliegende bzw. von der Stromversorgung geführte Spannung anlegbar ist, da die Stromversorgung die Hauptenergiequelle des Haupttransformators bzw. des Schienenfahrzeugs ist. Unter der Sekundärseite des Haupttransformators wird hingegen diejenige Seite verstanden, an die Stromrichter zum Versorgen eines etwaigen Gleichspannung-Zwischenkreises, von Traktionsmotoren oder von sogenannten Hilfsbetrieben anschließbar sind. Je nach der betrachteten Seite kann von einer dort anliegenden Primärspannung oder Sekundärspannung gesprochen werden.

Dass das Schienenfahrzeug eine Trennstelle der Stromversorgung passiert, kann wiederum vom Fahrer zum Beispiel per Lichtsignal erkannt oder kann (zum Beispiel anhand einer detektierten Spannung) automatisch erkannt werden. Analog zu existierenden Lösungen kann dann vom Fahrer oder automatisch die Traktionsleistung reduziert werden. Anschließende Schritte, wie zum Beispiel das Anlegen der Wechselspannung oder auch sämtliche weitere hierin geschilderten Maßnahmen, können prinzipiell vom Fahrer oder fahrerautonom eingeleitet werden.

Das Anlegen einer Wechselspannung an der Sekundärseite des Haupttransformators erfolgt durch einen geeigneten Wechselspannungsgenerator. Hierbei handelt es sich, wie nachstehend noch näher erläutert, erfindungsgemäß um einen vorhandenen Stromrichter und insbesondere einen Netzstromrichter, der als ein Wechselrichter betrieben wird. Der Stromrichter wird bevorzugt aus elektrischen Energiequellen oder von elektrischen Energiegeneratoren des Schienenfahrzeugs mit elektrischer Energie gespeist und wandelt diese in eine Wechselspannung um, die an der Sekundärseite des Haupttransformators anliegt.

Durch Anlegen der Wechselspannung an der Sekundärseite wird ein Magnetfeld des Haupttransformators zumindest teilweise aufrechterhalten, was vorstehend diskutierte Vorteile z.B. des Vermeidens von Einschaltströmen mit sich bringt. Zudem wird auch eine Primärspannung an der Primärseite des Haupttransformators induziert, aber kein signifikanter primärseitiger Stromfluss. Genauer gesagt kann die zum Einstellen der gewünschten Magnetisierung benötigte sekundärseitige Leistung wegen der großen Hauptinduktivität nur wenige kVA betragen und kann im Wesentlichen Blindleistung sein.

Die sekundärseitige Wechselspannung ist bevorzugt derart gewählt (z.B. hinsichtlich Spannung, Phasenlage und/oder Amplitude), dass eine gewünschte Primärspannung erzeugt wird. Letztere entspricht bevorzugt (z.B. ebenfalls hinsichtlich Spannung, Phasenlage und/oder Amplitude) einer Stromversorgungs- und insbesondere einer Oberleitungsspannung, die beispielsweise in einem auf eine Trennstelle folgenden Stromversorgungsabschnitt vorliegt und auf Basis nachstehend erläuterter Detektionen oder gespeicherter oder abrufbarer Informationen bekannt sein kann. Ob eine solche Primärspannung erzielt wird, kann insbesondere während des Passierens der Trennstelle per nachfolgend erläuterter Spannungsmesseinrichtung überprüft werden.

Allgemein kann hierin auf Grundwellen einer Sekundär- und/oder Primärspannung abgestellt werden, insbesondere im Zusammenhang mit hierin geschilderten Einstell- und Sychronisiervorgängen dieser Spannungen. Genauer gesagt können bei der nachstehend erläuterten Synchronisation Grundwellen der erzeugten Spannungen betrachtet werden und insbesondere eine Grundwelle der infolge der sekundärseitig angelegten Wechselspannung generierten Primärspannung des Haupttransformators. Diese sollte mit der Grundwelle einer erwarteten Phasenlage der Stromversorgung möglichst übereinstimmen. Dies trägt dem Umstand Rechnung, dass die genannten Spannungen auch weitere Wellen- bzw. Schwingungsanteile z.B. in Form von Oberwellen aufweisen können.

Gemäß einer bevorzugten Weiterbildung des Verfahrens und des erfindungsgemäßen Schienenfahrzeugs umfasst das Schienenfahrzeug ferner einen Hauptschalter, der dazu eingerichtet ist, bei einem Öffnen eine elektrische Verbindung zwischen dem Stromabnehmer und dem Haupttransformator zumindest temporär zu trennen (oder anders ausgedrückt zu unterbrechen), und wobei folgendes erfolgt:
- Geschlossenhalten des Hauptschalters während eines Passierens einer Trennstelle.

Der Hauptschalter kann gemäß herkömmlicher Bauart ausgebildet sein. Er kann der einzige Schalter zum selektiven Trennen der elektrischen Verbindung von Stromabnehmer und Haupttransformators sein. Der Hauptschalter kann eine Steuereinrichtung umfassen oder von einer Steuereinrichtung des Schienenfahrzeugs ansteuerbar sein, um selektiv geöffnet und geschlossen zu werden.

Dadurch, dass der Hauptschalter trotz Passieren einer Trennstelle geschlossen gehalten und nicht wie bisher vorübergehend geöffnet wird, wird die Anzahl von dessen Öffnungs- und Schließvorgängen während einer Fahrt des Schienenfahrzeugs reduziert. Dies mindert den Verschleiß und erhöht die Lebensdauer des Hauptschalters.

Eine weitere Ausführungsform von Verfahren und Schienenfahrzeug sieht vor, dass eine an der Primärseite anliegende Spannung gemessen und darauf basierend die Wechselspannung an der Sekundärseite angepasst wird. Für das Messen kann eine in bekannten Schienenfahrzeugen bereits vorhandene Spannungsmesseinrichtung verwendet werden, insbesondere ein sogenannter Oberspannungswandler, der die am Stromabnehmer anliegende Spannung z.B. für eine Informationsverarbeitung und elektrische Sicherheit geeignet umformt. Die Spannungsmesseinrichtung kann zwischen dem Stromabnehmer und dem Hauptschalter positioniert sein. Dadurch, dass der Hauptschalter erfindungsgemäß bevorzugt geschlossen gehalten wird, kann der Oberspannungswandler auch während dem Passieren einer Trennstelle für Spannungsmessungen an der Haupttransformator-Primärseite verwendet werden. Dies mindert etwaige Umbau- oder Neuplanungskosten, insbesondere beim Umrüsten bestehender Schienenfahrzeuge zum Ausführen der erfindungsgemäßen Lösung.

Durch Messen der Spannung an der Primärseite (Primärspannung) können unerwünschte Betriebszustände rechtzeitig detektiert werden, wie zum Beispiel Spannungsspitzen oder Resonanzeffekte. Die Wechselspannung an der Sekundärseite kann dann geeignet angepasst (insbesondere reduziert) werden, zum Beispiel durch entsprechendes Ansteuern eines die Wechselspannung erzeugenden Stromrichters. Hierfür kann wenigstens eine Steuereinrichtung des Schienenfahrzeugs verwendet werden. Insgesamt wird hierdurch die Betriebssicherheit durch Vermeiden unerwünschter Betriebszustände erhöht.

Gemäß einer weiteren Ausführungsform von Verfahren und Schienenfahrzeug wird die Wechselspannung derart erzeugt, dass eine Phasenlage der Spannung an der Primärseite gegenüber einer Phasenlage der Spannung an der Primärseite vor dem Passieren der Trennstelle verändert wird. Dem liegt der Gedanke zugrunde, dass sich insbesondere bei Phasen-Trennstellen der Stromversorgung die anliegenden Phasen vor der Trennstelle und nach der Trennstelle voneinander unterscheiden. Folglich wird auch die Wechselspannung bevorzugt derart erzeugt, dass sich die Phasenlage der Primärspannung gegenüber dem Zustand vor dem Einfahren in die Trennstelle verändert. Dies reduziert den Synchronisierungsaufwand mit der neuen Phasenlage bei einem Ausfahren aus der Trennstelle.

Während dem Durchfahren der Trennstelle kann die Veränderung der Phasenlage gleichmäßig und mit nur geringen Änderungsraten erfolgen. Bei einem Einfahren in einen folgenden spannungsführenden Stromversorgung-Abschnitt kann diese Veränderung hingegen größeren Änderungsraten unterliegen und insbesondere nach Maßgabe der schlagartig wieder anliegenden Primärspannung verändert werden.

Sämtliche hierin erwähnten Komponenten und insbesondere jegliche Stromrichter und/oder eine etwaige Detektionseinrichtung können über eine ausreichend übereinstimmende und insbesondere eine synchronisierte Zeitskala verfügen. Die Phasenlage kann in Bezug auf diese Zeitskala definiert sein. Beispielsweise kann diesen Komponenten ein gemeinsames Zeit-Signal (Clock-Signal) bereitgestellt werden, insbesondere über die hierin diskutierte Steuereinrichtung.

Die Ausnahme einer ausreichenden zeitlichen Synchronisierung kann insbesondere für lange Trennstellen mit einer Länge von mehr als 200 m oder mehr als 400 m gelten. Kurze Trennstellen mit einer Länge von weniger als 200 m oder auch weniger als 100 m können aufgrund eines nur kurzen zur Verfügung stehenden Synchronisierungs-Zeitfensters im Vergleich höhere Anforderungen an Übereinstimmungen von Zeitinformationen bzw. einer gemeinsamen Zeitskala stellen, beispielsweise da aus einer mangelnden Übereinstimmung resultierende Abweichungen unter Umständen nicht mehr rechtzeitig ausgeregelt werden können.

Der Zusammenhang zwischen Sekundärspannung und Primärspannung sowie insbesondere den Phasenlagen dieser Spannungen und somit auch, mit welchen Phasenlagen an der Primärseite welche Phasenlagen an der Sekundärseite eingestellt werden können (und umgekehrt), ergibt sich aus der Konstruktion des Haupttransformators und/oder kann vorab experimentell ermittelt werden. Informationen betreffend diesen Zusammenhang können in einer Speichereinrichtung des Schienenfahrzeugs hinterlegt werden. Eine Steuereinrichtung des Schienenfahrzeugs kann dann auf diese Informationen zurückgreifen, wie optional auch auf Informationen zu einer neuen erwarteten Phasenlage, und kann dann die Wechselspannung an der Sekundärseite geeignet einstellen.

Die erwartete Phasenlage kann zusätzlich oder alternativ zum Hinterlegen in einer Speichereinrichtung (z.B. gemeinsam mit einem Orts- oder Stromversorgungsabschnitts-Identifizierer) automatisch ermittelt werden, bspw. zumindest teilweise anhand von Informationen, die von einem ATC-System übermittelt werden. Letzteres kann (zum Beispiel über bekannte Balisen) Informationen betreffend einen Ort des Schienenfahrzeugs und auch etwaiger Trennstelle übermitteln. Welche Phasen jedoch in einzelnen Strom-Versorgungsabschnitten vorliegen, kann hingegen nicht zwingend von bekannten ATC-System übertragen werden, sondern zum Beispiel in einer Speicherrichtung des Schienenfahrzeugs hinterlegt sein, welches dann anhand des erkannten Ortes auf die dazugehörigen Phasen-Informationen zugreift. Allgemein sind die Phasenlagen aufeinanderfolgender Stromversorgungsabschnitte durch Verschaltungen der diese Abschnitte speisenden Unterwerke vorgegeben und zum Beispiel in Infrastruktur-Tabellen der Bahnnetzbetreiber hinterlegt.

Gemäß einer Ausführungsform von Verfahren und Schienenfahrzeug kann die Phasenlange auch sensorisch erfasst werden, wofür eine Detektionseinrichtung verwendet werden kann. Die Detektionseinrichtung kann ein Detektionssignal liefern (zum Beispiel über eine darin integrierte Messeinheit), das von einer Auswerteeinrichtung der Detektionseinrichtung zum Bestimmen der Phasenlage ausgewertet werden kann. Die Auswerteeinrichtung kann in eine Steuereinrichtung des Schienenfahrzeugs integriert sein und/oder räumlich von der Messeinheit beabstandet sein. Sofern hierin auf Positionierungen der Detektionseinrichtung abgestellt wird, kann dies ausschließlich eine etwaige Messeinheit betreffen. Ein Beispiel einer geeigneten Detektionseinrichtung findet sich in der EP 3 182 142 A, insbesondere in Form der Vorrichtung 1 aus der dortigen Figur 1. Die dortigen Sensorelemente bzw. kapazitiven Einheiten sind in der Lage, in Reaktion auf in einer Stromversorgung anliegenden Spannung selbst Spannungen zu erzeugen. Der zeitliche Verlauf dieser erzeugten Spannungen folgt denjenigen der Stromversorgung, sodass daraus auch die Phasenlage der Stromversorgung bestimmbar ist. Beispielsweise wirken die kapazitiven Einheiten als eine Art kapazitiver Spannungsteiler, wobei die darin abfallende Spannung in ihrem Verlauf derjenigen der Stromversorgung folgt, was Rückschlüsse auf die Phasenlage ermöglicht. Die Detektionseinrichtung kann berührungslos arbeiten und/oder berührungslos die relevanten Informationen detektieren. Genauer gesagt kann sie die Stromversorgung während der Detektion nicht berühren.

Alternativ zu einer kapazitiv und/oder nach Art eines Spannungsteilers arbeitenden Detektionseinrichtung kommt auch ein Feldsensor (oder auch Feldmühle) als Detektionseinrichtung (oder zumindest als Messeinheit hiervon) in Betracht.

Die Phasenlage nach der Trennstelle kann optional also auch detektiert bzw. gemessen werden. Die Detektionseinrichtung (und insbesondere zumindest eine etwaige Messeinheit hiervon) ist dabei in Fahrtrichtung betrachtet bevorzugt vor dem Stromabnehmer positioniert, um die vorausliegende Phasenlage zu ermitteln, bevor der Stromabnehmer in den Stromversorgungs-Abschnitt (Fahrdrahtabschnitt) mit dieser Phasenlage einfährt. Beispielsweise können die Detektionseinrichtung und der Stromabnehmer in unterschiedlichen Fahrzeughälften positioniert und/oder, an verschiedenen Einzelfahrzeugen oder Wagen angeordnet sein und insbesondere um mehrere Einzelfahrzeuge bzw. Wagen voneinander beabstandet sein.

Die Phasenlage der Primärspannung wird bevorzugt zumindest soweit mit der (erwarteten oder gemessenen) Phasenlage nach der Trennstelle synchronisiert, dass etwaige Ausgleichsströme einen zulässigen Maximalwert nicht überschreiten. Der zulässige Maximalwert kann eine Grenze definieren, ab deren Überschreiten mit einem erhöhten Risiko von Schutzabschaltungen zu rechnen ist.

Insbesondere kann vorgesehen sein, dass infolge der Synchronisation die geänderte Phasenlage (der Haupttransformators-Primärspannung) einer (zum Beispiel erwarteten oder gemessenen) Phasenlage der Stromversorgung nach der Trennstelle entspricht oder eine Phasendifferenz zu dieser Phasenlage, die nach der Trennstelle vorliegt, eine zulässige Maximaldifferenz nicht überschreitet. Die zulässige Maximaldifferenz kann derart gewählt sein, dass bis zum Erreichen dieser Maximaldifferenz keine unzulässig hohen Ausgleichsströme auftreten und insbesondere keine Ausgleichsströme, die den vorstehend erläuterten zulässigen Maximalwert überschreiten.

Wie die Wechselspannung an der Sekundärseite gewählt werden muss, damit eine Synchronisation gelingt, die die hierin geschilderten Bedingungen hinsichtlich Ausgleichsstrom und/oder Phasendifferenz erfüllt, kann per Simulation oder Testfahrten bestimmt werden.

Gemäß einer bevorzugten Variante des Verfahrens und des Schienenfahrzeugs liegt eine ausreichende Synchronisation bei einer Phasendifferenz von nicht mehr als 135° und insbesondere nicht mehr als 120° der Phasenlagen vor, d. h. bei derartigen Phasendifferenzen treten erwartungsgemäß keine unzulässig hohen Ausgleichsströme auf.

Allgemein können bei der Synchronisation Grundwellen der erzeugten Spannungen betrachtet werden und insbesondere eine Grundwelle der infolge der sekundärseitig angelegten Wechselspannung generierten Primärspannung des Haupttransformators. Diese sollte mit der Grundwelle einer erwarteten Phasenlage möglichst übereinstimmen.

Weiter hat sich gezeigt, dass dann, wenn in der nachstehend erläuterten Weise zusätzlich eine elektrische Last an den Haupttransformator angeschlossen wird (zum Beispiel in Form eines weiteren Stromrichters im Gleichrichterbetrieb), auch größere Phasendifferenzen in Kauf genommen werden können, als wenn eine solche Last nicht vorhanden ist. Die Anforderungen an die Synchronisation können also bei Zuschalten einer solchen Last geringer ausfallen bzw. es kann eine größere Phasendifferenz akzeptiert werden.

Gemäß einer Variante des Verfahrens und des Schienenfahrzeugs ist es auch möglich, dass bei bekannten Phasendifferenzen zwischen den einzelnen Phasen bzw. Strömen eines Versorgungsstromnetzes und/oder der Stromversorgung eine Vermutung getroffen wird, welche Phasenlage als nächstes erwartet wird. Es ist beispielsweise bekannt, dass in einem Versorgungsstromnetz die Phasendifferenz zwischen den drei Phasen jeweils 120° beträgt, benachbarte Speiseabschnitte durch entsprechendes Betreiben der Unterwerke jedoch auch andere Phasendifferenzen von zum Beispiel 60°, 90°, 180°, aber prinzipiell ebenfalls 120°aufweisen können. In der Regel kann mit hinreichender Sicherheit davon ausgegangen werden, dass sich die Phasen benachbarter gespeister Streckenabschnitte der Stromversorgung stets voneinander unterscheiden, kann beim Erreichen einer Trennstelle (zum Beispiel von einer Steuereinrichtung des Schienenfahrzeugs) die Annahme getroffen werden, dass sich die vorausliegende Phasenlage um mindestens + 60° oder mindestens - 60° von der vorangehenden Phasenlage unterscheidet. Im Fehlerfall ist allerdings auch ein Unterschied der Phasenlagen von 0° möglich. Die sekundärseitige Wechselspannung kann dann entsprechend gewählt werden, um eine primärseitige Spannung mit dieser vermuteten Phasenlage einzustellen.

Sollte eine falsche Wahl getroffen sein, kann die maximale Phasendifferenz von z.B. 120° beim Einfahren in den nächsten spannungsführenden Abschnitt der Stromversorgung ggf. dennoch keine unzulässig hohen Ausgleichsströme hervorrufen. Dies gilt insbesondere dann, wenn zusätzlich die bereits erwähnte Last an den Haupttransformator angelegt wird, welche derartige Ausgleichsströme dämpft.

Gemäß einem weiteren Aspekt des Verfahrens und des Schienenfahrzeugs umfasst das Schienenfahrzeug ferner einen ersten Stromrichter. Dieser ist bevorzugt wahlweise als Gleichrichter zum Gleichrichten einer von dem Haupttransformator transformierten Spannung für das Versorgen eines Gleichspannungs-Zwischenkreises des Schienenfahrzeugs betreibbar ist oder als Wechselrichter zur elektrischen Energieversorgung des Haupttransformators mit Energie aus dem Gleichspannungs-Zwischenkreis. Bei diesem Aspekt umfasst das Verfahren erfindungsgemäß folgendes:
- Betreiben des ersten Stromrichters als Wechselrichter zum Erzeugen der Wechselspannung, während das Schienenfahrzeug eine Trennstelle der Stromversorgung passiert.

Der obige Stromrichter wird hierin lediglich beispielhaft als "erster" Stromrichter bezeichnet, um ihn von einem nachstehend erläuterten erfindungsgemäßen "weiteren" Stromrichter zu unterscheiden. Der erste und der weitere Stromrichter können prinzipiell gleichartig ausgebildet sein, sind jedoch bevorzugt an verschiedene und insbesondere an individuell zugeordnete Sekundärwicklungen (oder anders ausgedrückt Sekundärspulen) des Haupttransformators angeschlossen.

Der erste Stromrichter kann ein sogenannter Netzstromrichter sein. Dieser zeichnet sich dadurch aus, dass er eine Sekundärspannung des Haupttransformators gleichrichtet, um einen Gleichspannungs-Zwischenkreis zu speisen. In an sich bekannter Weise und wie in Zusammenhang mit dem erfindungsgemäßen Schienenfahrzeug noch näher erläutert, kann der Gleichspannungs-Zwischenkreis allgemein wenigstens einen Hilfsbetrieb und/oder ein Bordnetz und/oder wenigstens ein Motorstromrichter und/oder (zumindest mittelbar) wenigstens einen Traktionsmotor des Schienenfahrzeugs mit elektrischer Energie speisen.

Der Stromrichter kann in an sich bekannter Weise Halbleiterschaltelemente umfassen, die zum Betreiben als Wechselrichter oder Gleichrichter geeignet angesteuert bzw. geschaltet werden können.

Zum Versorgen des ersten Stromrichters mit elektrischer Energie kann auf verschiedene elektrische Energiequellen des Schienenfahrzeugs zurückgegriffen werden. Beispielsweise kann ein aufladbarer elektrischer Energiespeicher in Form einer Batterie bereitgestellt sein.

Zusätzlich oder alternativ kann ein Traktionsmotor des fahrenden Schienenfahrzeugs als Generator betrieben werden (Stützbremsbetrieb). Die dabei erzeugte elektrische Energie kann von dem ersten Stromrichter verwendet werden, um eine Wechselspannung zu erzeugen und an die Sekundärseite des Haupttransformators anzulegen. Insbesondere kann also vorgesehen sein, während eines Passierens einer Trennstelle ein Stützbremsbetrieb zu aktivieren, um dem Gleichspannungs-Zwischenkreis Energie zuzuführen. Dieser kann dann den ersten Stromrichter speisen.

Mittels jeglicher der vorstehend genannten Energiequellen kann auch vorgesehen sein, ein Bordnetz und/oder Hilfsbetriebe der hierin geschilderten Art zu betreiben und auch beim Durchfahren einer Trennstelle weiter mit elektrischer Energie zu versorgen. Dies verbessert den Passagierkomfort, da auch beim Durchfahren einer Trennstelle Hilfsbetriebe, wie zum Beispiel eine Fahrzeugklimatisierung, eine Innenraumbeleuchtung aber auch ein Traktionsmotor-Lüfter, unterbrechungsfrei weiterbetrieben werden können.

Erfindungsgemäß ist ferner vorgesehen, dass während eines Passierens einer Trennstelle ein weiterer Stromrichter als Gleichrichter betrieben und von dem Haupttransformator mit elektrischer Energie versorgt wird. Dieser Stromrichter ist bevorzugt ebenfalls ein Netzstromrichter der vorstehend erläuterten Art. Der weitere Stromrichter kann über eine eigene Sekundärwicklung mit dem Haupttransformator verbunden sein, also insbesondere über eine andere Sekundärwicklung als der erste Stromrichter. Dadurch, dass er von dem Haupttransformator mit elektrischer Energie gespeist wird, bildet der weitere Stromrichter eine definierte elektrische Last. Eine Wirkleistung von mehr als 1 kW des weiteren Stromrichters kann dabei für ausreichend stabile Verhältnisse sorgen. Eine vollständige Energieversorgung eines Bordnetzes bzw. etwaiger Hilfsbetriebe über diesen Stromrichter ist zumindest in dem geschilderten Betriebszustand nicht erforderlich, da zum Beispiel auch auf einen per Stützbremsbetrieb oder Energiespeicher gespeisten Gleichspannungs- Zwischenkreis zurückgegriffen werden kann

Auch dies hilft, die Betriebssicherheit gefährdende Resonanzen zu verhindern, die auftreten können, wenn beim Durchfahren der Trennstelle die primärseitige Spannungsversorgung abbricht. Es hat sich gezeigt, dass die Belastung durch den weiteren Stromrichter dämpfend auf derartige Resonanzen wirkt, insbesondere in Kombination mit der anspruchsgemäß sekundärseitig angelegten Wechselspannung und der folglich aufrechterhaltenen Magnetisierung des Haupttransformators. Insbesondere ist es hierdurch möglich, etwaige entstehende Resonanzen zumindest teilweise zu kompensieren, die entstehen können, da Induktivitäten und parasitäre Kapazitäten innerhalb des nicht-idealen Haupttransformators eine schwingungsfähige Anordnung bilden. Diese kann beim Einfahren in einer Phasen-Trennstelle samt damit einhergehende Spannungsänderungen zu Schwingungen angeregt werden.

Alternativ oder zusätzlich kann eine definierte elektrische Last auch dadurch bereitgestellt werden, dass wenigstens ein Traktionsmotor des Schienenfahrzeugs beim Passieren der Trennstelle Traktionsenergie erzeugt, wobei die hierfür benötigte elektrische Energie von einem weiteren Traktionsmotor erzeugt wird, der im Stützbremsbetrieb betrieben wird. Dabei wird die erzeugte Energie des weiteren Traktionsmotors bevorzugt über den oben erläuterten ersten Stromrichter zur Magnetisierung des Haupttransformators verwendet (d. h. zum dortigen Anlegen einer Wechselspannung). Der zum Erzeugen von Traktionsenergie betriebene Traktionsmotor wird hingegen bevorzugt über den oben erläuterten weiteren Stromrichter vom Haupttransformators mit elektrischer Energie gespeist. Somit stellen sich die vorstehend erläuterten Vorteile infolge einer aufrechterhaltenen Magnetisierung bei einer definierten Belastung des Haupttransformators ein.

Gemäß einer Weiterbildung wird die Wechselspannung derart erzeugt, dass eine Magnetisierung (d.h. ein Magnetfluss und/oder eine verbleibende Remanenz) des Haupttransformators während des Passierens der Trennstelle reduziert wird und/oder einen zulässigen Maximalwert nicht überschreitet. Insbesondere kann eine Amplitude der Wechselspannung hierfür geeignet gewählt werden und insbesondere gegenüber einer Amplitude der Primärspannung vor dem Einfahren in die Trennstelle reduziert werden. Eine Phasenlage der Wechselspannung kann hingegen prinzipiell beliebig gewählt werden, d.h. diese Weiterbildung kann alternativ (optional aber auch zusätzlich) zu einer Phasen-Synchronisierung durchgeführt werden.

Allgemein liegt dieser Weiterbildung der Gedanke zugrunde, die Magnetisierung des Haupttransformators derart zu begrenzen, dass selbst bei einem unsynchronisierten Einfahren in einen nach der Trennstelle liegenden Stromversorgungsabschnitt keine unerwünscht hohen Einschaltströme auftreten. Der Haupttransformator kann also gezielt (zumindest teilweise) entmagnetisiert werden, insbesondere um eine bei Einfahren in die Trennstelle zunächst vorliegende magnetische Durchflutung von z.B. 0,6 T - 0, 7 T (im Vergleich zu z.B. 1,5 T- 1,6 T bei primärseitiger Nennspannung außerhalb der Trennstelle) zu reduzieren. Diese Entmagnetisierung kann durch Erzeugen eines bevorzugt sukzessive abklingenden Wechselmagnetfelds erfolgen, das nach Maßgabe der angelegten sekundärseitigen Wechselspannung mit z.B. entsprechend sukzessiver abklingender Amplitude erzeugt wird.

Hierdurch soll der bei Einschaltvorgängen von Transformatoren bekannte kritische Fall vermieden werden, dass das Einschalten im Nulldurchgang einer neu oder auch wieder angelegten Primärspannung mit derselben Polarität wie eine verbleibende Remanenz erfolgt. Dies würde zu besonders hohen Einschaltströmen führen. Durch Begrenzen der Magnetisierung und bevorzugt Reduzieren der Remanenz während dem Durchfahren der Trennstelle wird sichergestellt, dass derartige besonders hohen Einschaltströme nicht erreicht oder zumindest nicht überschritten werden. Trotz optional ausbleibender Phasen-Synchronisierung werden also keine Betriebszustände erreicht, für die der Haupttransformator und/oder hiermit elektrisch verbundene Komponenten nicht ausgelegt sind oder erst gesondert ausgelegt werden müssten, da etwaige Ausgleichsströme einen Maximalwert (engl.: maximum Inrush) nicht überschreiten.

Genauer gesagt kann die Wechselspannung und kann insbesondere deren Amplitude derart gewählt werden, dass ein Magnetfluss des Haupttransformators (z.B. in dessen Magnetkern) eine maximale mögliche, eine gemessene oder eine typischerweise erwartete Remanenz nicht überschreitet. Dieser Magnetfluss kann den oben genannten Maximalwert bilden, der nicht überschritten werden soll. Die maximal mögliche Remanenz kann beim Ausschalten im Spannungsnulldurchgang und insbesondere nach bereits erreichter Sättigung auftreten. Als erwartete Remanenz kann von einer bei typischen Betriebsbedingungen und gegebener Haupttransformator-Konstruktion auftretende Remanenz ausgegangen werden, die bspw. einer maximalen Remanenz entsprechen kann. Im vorliegenden Fall liegt dann typischerweise zunächst eine magnetische Durchflutung in der Größenordnung dieser Remanenz vor, wenn in die Trennstelle eingefahren und sekundärseitig die Wechselspannung angelegt wird.

Beispielsweise kann die Amplitude im Vergleich zu der Amplitude der sekundärseitigen Wechselspannung bei einem Fahren in einem spannungsführenden Abschnitt der Stromversorgung reduziert werden (z.B. um wenigstens ein Drittel oder wenigstens die Hälfte). Eine Amplitudenreduktion kann allgemein durch verändertes Betreiben des entsprechenden Stromrichters erzielt werden, insbesondere durch ein verändertes Takten hiervon. Beispielsweise können die Takt- bzw. Einschaltzeiten des Stromrichters bei einer Pulsweitenmodulation weiter auseinanderliegen, als dies für ein Erzeugen von höheren Spannungsamplituden der Fall ist.

Der Zusammenhang zwischen einer Amplitude der sekundärseitigen Wechselspannung und der sich einstellenden Magnetisierung kann vorab experimentell ermittelt oder berechnet werden. Es sind auch Magnetflussmessungen möglich, sodass die Wechselspannung zum Erreichen eines gewünschten Magnetflusses geeignet geregelt werden kann. Wie hierin geschildert, kann aber allgemein ein (vorzugsweise sukzessives) Reduzieren gegenüber der vormaligen Amplitude im spannungsführende Abschnitt sowie ein Anliegen über eine gewisse Mindestanzahl von Wechselspannungs-Halbwellen eine gewünschte Entmagnetisierung ermöglichen.

Zum Reduzieren einer Remanenz kann allgemein vorgesehen sein, mehr als eine Halbwelle der sekundärseitigen Wechselspannung mit vorzugsweise reduzierter Amplitude zu durchlaufen und bspw. wenigstens drei oder wenigstens fünf solcher Halbwellen. Die Wechselspannungsfrequenz kann allgemein ausreichen oder gezielt angepasst werden, um sicherzustellen, dass eine solche Anzahl von Halbwellen während einer Fahrt (mit bekannter und/oder erwarteter Geschwindigkeit) durch eine Trennstelle (mit bekannter und/oder erwarteter Länge) durchlaufen werden kann.

Bevorzugt kann die Amplitude sukzessive reduziert werden. Zum Beispiel kann nach einer vorbestimmten Anzahl durchlaufener Ganz- oder Halbwellen (bevorzugt mehrmals) eine weitere Anzahl von Ganz- oder Halbwelle mit (bevorzugt jeweils) nochmals reduzierter Amplitude durchlaufen werden. Beispielsweise kann zunächst die Amplitude derart gewählt sein, dass die Koerzitivfeldstärke erreicht wird. Anschließend kann die Amplitude sukzessive abklingen. Ein Wert der Amplitude kann dabei jeweils über eine definierte Anzahl von Ganz- oder Halbwellen aufrechterhalten werden (z.B. über mindestens drei Halbwellen).

Die Amplitude der sekundärseitigen Wechselspannung kann, als ein allgemeiner Aspekt der Erfindung, ebenfalls gemessen werden oder aus Betriebsparametern des spannungserzeugenden Stromrichters ermittelt werden.

Es hat sich gezeigt, dass bei einer entsprechend reduzierten Remanenz und dem Vermeiden eines Bereichs von ca. 45°-55° um das genau gegenphasige Einschalten (Differenz von 180°) ein Einschaltstrom kleiner wird, als dies bei vorstehenden geschilderten ungünstigen Einschaltbedingungen maximal möglich wäre.

Die Erfindung betrifft auch ein Schienenfahrzeug (zum Beispiel in Form eines Verbundes aus mehreren Einzelfahrzeugen, bevorzugt mit wenigstens einer Lokomotive oder wenigstens einem Triebwagen, oder aber in Form eines Einzelfahrzeugs, insbesondere einer Lokomotive oder eines Triebwagens). Das Schienenfahrzeug weist die Merkmale des beigefügten Anspruchs 8 auf und u.a.:
- wenigstens einen Stromabnehmer zum Aufnehmen elektrischer Energie von (oder aus) einer fahrzeugexternen Stromversorgung;
- einen Haupttransformator zum Transformieren der aufgenommenen elektrischen Energie, die an einer Primärseite des Haupttransformators bereitgestellt ist, auf ein gewünschtes Spannungsniveau an einer Sekundärseite des Haupttransformators;
wobei während das Schienenfahrzeug eine Trennstelle der Stromversorgung passiert, eine Wechselspannung an der Sekundärseite des Haupttransformators anlegbar ist.

Das Schienenfahrzeug kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann das Schienenfahrzeug dazu eingerichtet sein, ein Verfahren gemäß jeglichem der vorstehenden oder nachstehenden Aspekte auszuführen. Sämtliche der vorstehenden Ausführungen zu und Weiterbildungen von Verfahrensmerkmalen können auch auf die gleichlautenden Fahrzeugmerkmale zutreffen bzw. bei diesen vorgesehen sein.

Insbesondere umfasst das Schienenfahrzeug wenigstens einen Stromrichter (zum Beispiel einen Netzstromrichter gemäß jeglichem der vorstehenden Aspekte) und eine Steuereinrichtung, wobei die Steuereinrichtung dazu eingerichtet ist, den Stromrichter derart anzusteuern, dass dieser während des Passierens der Trennstelle als Wechselrichter betrieben wird und die an der Sekundärseite anliegende Wechselspannung erzeugt

Die Steuereinrichtung kann als Bestandteil des Stromrichters ausgebildet bzw. räumlich mit diesem zusammengefasst sein. Weitere mögliche Varianten und Merkmale der Steuereinrichtung werden nachstehend diskutiert. Die Steuereinrichtung (oder eine andere bzw. zusätzliche Steuereinrichtung des Schienenfahrzeugs) ist bevorzugt ferner dazu eingerichtet, die folgenden Maßnahmen, allein oder in beliebiger Kombination, auszuführen oder zu veranlassen:
- Geschlossenhalten des Hauptschalters während eines Passierens einer Trennstelle, zum Beispiel durch Ausgeben eines entsprechenden Schließbefehls oder Verhindern der Ausgabe eines Öffnungsbefehls.
- Anpassen der Wechselspannung an der Sekundärseite basierend auf einer gemessenen Spannung an der Primärseite, wobei die Steuereinrichtung hierfür auf die Messergebnisse von einer Spannungsmesseinrichtung und insbesondere einem Oberspannungswandler des Schienenfahrzeugs zurückgreifen kann.
- Verändern einer Phasenlage der Spannung an der Primärseite gegenüber einer Phasenlage vor dem Passieren der Trennstelle, wofür die Wechselspannung geeignet eingestellt werden kann. Die Anpassung kann in der vorstehend erläuterten Weise derart erfolgen, dass die geänderte Phasenlage einer nach der Trennstelle erwarteten und/oder gemessenen Phasenlage der Stromversorgung entspricht.
- Das Schienenfahrzeug umfasst ferner einen ersten Stromrichter, der wahlweise als Gleichrichter zum Gleichrichten einer von dem Haupttransformator transformierten Spannung für das Versorgen eines Gleichspannungs-Zwischenkreises des Schienenfahrzeugs betreibbar ist oder als Wechselrichter zur elektrischen Energieversorgung des Haupttransformators mit Energie aus dem Gleichspannungs-Zwischenkreis. Die Steuereinrichtung ist dazu eingerichtet, den ersten Stromrichter als Wechselrichter zum Erzeugen der Wechselspannung zu betreiben, während das Schienenfahrzeug eine Trennstelle der Stromversorgung passiert und/oder diesen als Gleichrichter zu betreiben, insbesondere nach dem Passieren der Trennstelle.

Aus dem Gleichspannungs-Zwischenkreis können (bevorzugt ebenfalls unter Steuerung durch die Steuereinrichtung) Hilfsbetriebe des Schienenfahrzeugs (bspw. Lüfter, Innenraumbeleuchtung, Fahrzeugklimatisierung) über ein sogenanntes Bordnetz versorgt werden. Weiter umfasst das Schienenfahrzeug bevorzugt wenigstens einen Traktionsmotor, der ebenfalls mit Energie aus dem Gleichspannungs-Zwischenkreis angetrieben werden kann. Hierfür kann ein Motorstromrichter vorgesehen sein, der die Zwischenkreisspannung in eine für den Betrieb des Traktionsmotors geeignete Wechselspannung wandelt.

Als eine alternative elektrische Energiequelle für die Hilfsbetriebe, den Traktionsmotor oder aber den ersten Stromrichter, kann das Schienenfahrzeug auch wenigstens einen elektrischen Energiespeicher umfassen (zum Beispiel in Form einer Batterie). Weiter kann ein vorstehend erwähnter Stützbremsbetrieb aktiviert werden (zum Beispiel durch die Steuereinrichtung), in dem einer der Traktionsmotoren als Generator betrieben wird und zum Beispiel elektrische Energie unter Gleichrichten mittels eines Motorstromrichters in den Gleichspannung-Zwischenkreis zurückspeist.
- Das Schienenfahrzeug umfasst auch einen ein weiteren Stromrichter, der beim Passieren einer Trennstelle als Gleichrichter betreibbar und dabei von dem Haupttransformator mit elektrischer Energie versorgbar ist. Der Stromrichter kann ebenfalls ein Netzstromrichter und wahlweise als Gleichrichter oder Wechselrichter betreibbar sein. Durch Ansteuern mittels der Steuereinrichtung kann der gewünschte Betriebsmodus eingestellt werden.

Die Steuereinrichtung kann wenigstens eine Prozessoreinrichtung umfassen, die bevorzugt wenigstens einen Mikroprozessor aufweist. Die Prozessoreinrichtung kann dazu eingerichtet sein, Programmanweisungen auszuführen, die zum Beispiel auf einer Speichereinrichtung für bevorzugt digitale Information hinterlegt sind. Hierdurch kann die Steuereinrichtung das Schienenfahrzeug dazu veranlassen, sämtliche hierin geschilderten Verfahrensschritte und Verfahrensmaßnahmen auszuführen. Insbesondere kann die Steuereinrichtung sämtliche hierin geschilderten Funktionen von ATC-Systemen ausführen oder ein solches auf ATC-System bereitstellen bzw. hiervon umfasst sein.

Die Steuereinrichtung kann in eine einzige Einheit oder in eine einzige übergeordnete Komponente des Schienenfahrzeugs integriert sein, wie zum Beispiel in einen Stromrichter. Die Steuereinrichtung kann auch mehrere (elektronische und/oder digitale) Steuergeräte umfassen, die im Schienenfahrzeug verteilt sind und bevorzugt jeweils wiederum eine Prozesseinrichtung umfassen. Zumindest einige der verteilten Steuergeräte sind dabei bevorzugt dazu eingerichtet, miteinander zu kommunizieren. Eines der Steuergeräte kann ein zentrales Steuergerät sein und Informationen von anderen Steuergeräten erhalten und/oder diese zum Ausführen der erfindungsgemäßen Schritte und Maßnahmen ansteuern.

Im Folgenden wird eine Ausführungsform der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
Fig. 1: eine Ansicht eines erfindungsgemäßen Schienenfahrzeugs gemäß einer Ausführungsform der Erfindung, wobei das Schienenfahrzeug ein erfindungsgemäßes Verfahren ausführt;
Fig. 2: eine schematische Ansicht eines Antriebssystems des Schienenfahrzeugs aus Figur 1;
Fig. 3: Diagramme zum Erläutern des Verlaufs der Geschwindigkeit und der Traktionsleistung beim Passieren einer Trennstelle; und
Fig. 4: ein Ablaufschema eines Verfahrens, das von dem Schienenfahrzeug der Figuren 1 und 2 ausgeführt wird.

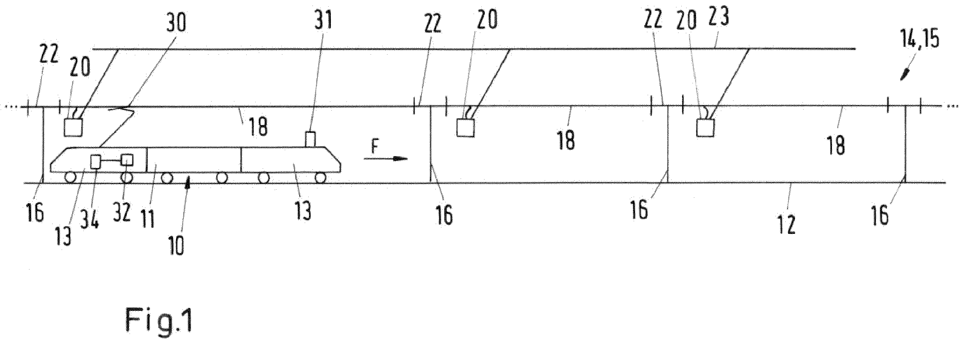

In Figur 1 ist ein Schienenfahrzeug 10 gemäß einem Ausführungsbeispiel der Erfindung gezeigt. Das Schienenfahrzeug 10 umfasst einen Verbund aus Einzelfahrzeugen im Form von einem Mittelwagen 11 und zwei Triebwagen 13. Die hierin erläuterten Komponenten des Schienenfahrzeugs 10 können prinzipiell in beliebiger Weise auf den Mittelwagen 11 und die Triebwagen 13 verteilt werden. Ebenso könnte aber auch lediglich eines der Einzelfahrzeuge 11, 13 sämtliche dieser Komponenten umfassen und ein Schienenfahrzeug 10 im Sinne dieser Offenbarung bilden.

Das Schienenfahrzeug 10 könnte auch mit einer gleichartigen Schienenfahrzeug 10 gekoppelt sein, das zum Beispiel vorausfährt. Dann könnte jedes dieser miteinander gekoppelten Schienenfahrzeuge 10 unabhängig voneinander in der nachstehend beschriebenen Weise betrieben werden.

Das Schienenfahrzeug 10 verkehrt auf einer Strecke 12, entlang derer eine Oberleitungsanlage 14 verläuft. Die Oberleitungsanlage 14 bildet eine fahrzeugexterne Stromversorgung 15. Sie umfasst in an sich bekannter Weise Masten 16, deren Abstände zueinander wie auch sämtliche weiteren Größenverhältnisse in Figur 1 nur schematisch dargestellt sind.

Zwischen den Masten 16 verlaufen spannungsführende Fahrdrahtabschnitte 18. Jeder dieser Fahrdrahtabschnitte 18 wird durch ein eigenes Unterwerk 20 gespeist, wobei jedes Unterwerk 20 aus einem übergeordneten Stromversorgungsnetz 23 (zum Beispiel aus einem Landesnetz) gespeist wird.

Im Bereich der Masten 16 sind benachbarte Fahrdrahtabschnitte 18 durch Phasen-Trennstellen 22 voneinander getrennt und genauer gesagt elektrisch voneinander isoliert. Die Phasen-Trennstellen 22 führen im gezeigten Ausführungsbeispiel keine Spannung und stellen daher neutrale Abschnitte der Stromversorgung 15 dar, in denen keine Energieaufnahme durch das Schienenfahrzeug 10 möglich ist.

Durch diesen Aufbau wird bekanntermaßen ermöglicht, dass jedes Unterwerk 20 einen zugeordneten Fahrdrahtabschnitt 18 mit einer individuellen Wechselstromphase aus dem dreiphasigen Stromversorgungsnetz 23 versorgt, um Schieflasten im Stromversorgungsnetz 23 zu vermeiden. In dem gezeigten Beispiel wechseln sich die Phasen dabei gleichmäßig ab, sodass in jedem Fahrradabschnitt 18 eine andere Phase anliegt als in dem in Fahrtrichtung F betrachtet vorausliegenden Fahrdrahtabschnitt 18.

Derartiges a priori Wissen kann in einer Steuereinrichtung 32 des Schienenfahrzeugs bzw. einer hiermit verbundenen Speichereinrichtung 34 hinterlegt sein oder von der Steuereinrichtung 32 von einem nicht dargestellten Infrastruktur-Server abgefragt werden. Bestandteil dieses Wissens kann auch sein, welcher Fahrdrahtabschnitt 18 welche Phase führt, was die Steuereinrichtung 32 entsprechend ermitteln bzw. auslesen kann.

Das Schienenfahrzeug 10 weist optional eine Phasendetektionseinrichtung 31 auf, mit der die Phase eines Fahrdrahtabschnittes 18 zusätzlich oder alternativ sensorisch erfasst werden kann. Die Phasendetektionseinrichtung 31 ist derart positioniert, dass sie gegenüber einem Stromabnehmer 30 des Schienenfahrzeugs 10 in Fahrtrichtung F betrachtet weiter vorne liegt. Der Stromabnehmer 30 ist in Kontakt mit den Fahrdrahtabschnitten 18 bringbar, um von diesen elektrische Energie aufzunehmen. Je nachdem, aus welchem Fahrdrahtabschnitt 18 das Schienenfahrzeug 10 aktuell gespeist wird, wird über den Stromabnehmer 30 ein Wechselstrom mit einer andersartigen Phase erhalten.

Es kann auch vorgesehen sein, dass das Schienenfahrzeug 10 zwei Stromabnehmer 30 und zwei Phasendetektionseinrichtungen 31 umfasst, wobei an jedem (in Fahrtrichtung F betrachtet) vorderen und hinteren Ende des Schienenfahrzeugs 10 ein Stromabnehmer 30 und eine Phasendetektionseinrichtung 31 angeordnet ist. Je nach aktueller Fahrtrichtung F wird dann bevorzugt derjenige Stromabnehmer 30 angehoben und in Kontakt mit der Stromversorgung 15 gebracht, der in Fahrtrichtung F betrachtet hinten liegt, und wird diejenige Phasendetektionseinrichtung 31 betrieben und ausgewertet, die in Fahrtrichtung F betrachtet vorne liegt.

Dies ermöglicht, dass die Phase eines vorausliegenden Fahrtdrahtabschnittes 18 bereits erkannt wird, wenn sich der Stromabnehmer 30 noch im Bereich des vorangehenden Fahrtdrahtabschnittes 18 befindet oder aber innerhalb der Phasen-Trennstelle 22. Somit existiert ein Zeitvorsprung bis zum Erreichen des nächsten Fahrtdrahtabschnitts 18, innerhalb dem zum Beispiel eine Phasen-Synchronisierung der hierin erläuterten Art durchgeführt werden kann.

Während einer Fahrt in die Fahrtrichtung F passiert das Schienenfahrzeug 10 mehrere Fahrdrahtabschnitte 18 mit unterschiedlichen Wechselspannungsphasen sowie auch die dazwischenliegenden neutralen Abschnitte in Form der Phasen-Trennstellen 22. Im Bereich dieser Phasen-Trennstellen 22 ist die Energieaufnahme aus dem Landesnetz 23 bzw. der Stromversorgung 15 temporär unterbrochen.

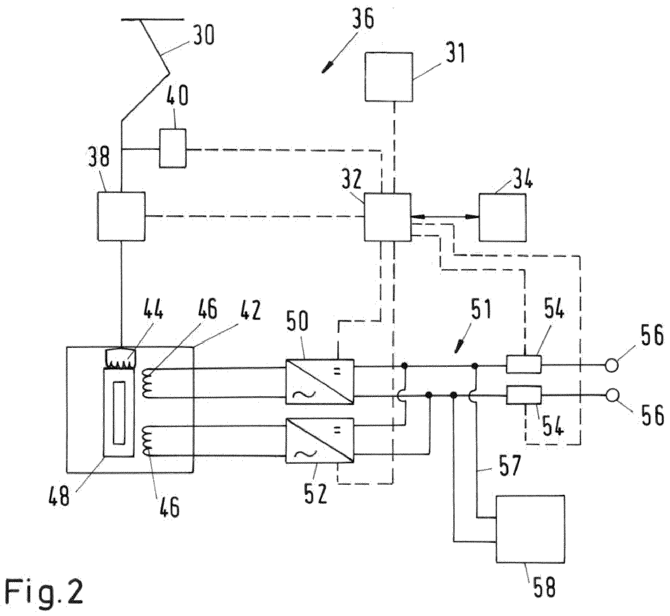

Einleitend wurde erläutert, wie sich dies bisher auf den Betrieb eines Schienenfahrzeugs 10 ausgewirkt hat und welche Maßnahmen beim Passieren von Phasen-Trennstelle 22 ergriffen wurden. Im Folgenden wird anhand von Figur 2 ein erfindungsgemäßes alternatives Vorgehen erläutert.

Figur 2 zeigt ein schematisch vereinfachtes Antriebssystem 36 des nicht näher dargestellten Schienenfahrzeugs 10 aus Figur 1. Wie erwähnt, können die Komponenten dieses Antriebssystem 36 prinzipiell auf beliebige Einzelfahrzeuge 11, 13 des Schienenfahrzeugs 10 verteilt, optional aber in einem der Triebwägen 13 zusammengefasst werden. Weiter können sämtliche der gezeigten Komponenten des Antriebsystems 36 mit der Steuereinrichtung 32 verbunden sein, um an diese Signale zu übermitteln und/oder Steuersignale von dieser zu erhalten. Dies gilt auch für die Phasendetektionseinrichtung 31 aus Figur 1.

Das Antriebssystem 36 ist elektrisch mit dem ebenfalls gezeigten Stromabnehmer 30 verbunden. Ausgehend von dem Stromabnehmer 30 wird die aufgenommene elektrische Energie über einen herkömmlichen Oberspannungswandler 40 und einen herkömmlichen Hauptschalter 38 zu einem ebenfalls herkömmlichen Haupttransformator 42 geführt. Der Hauptschalter 38 ist in bekannter Weise dazu eingerichtet, durch selektives Öffnen die elektrische Verbindung zwischen dem Stromabnehmer 30 und dem Haupttransformator 42 zu trennen.

Der Oberspannungswandler 40 kann eine anliegende Spannung und/oder einen Stromfluss messen, der primärseitig an dem Haupttransformator 42 anliegt. Der Oberspannungswandler 40 ist dabei in herkömmlicher Weise zwischen den Stromabnehmer 20 und den Hauptschalter 38 geschaltet.

Der innere Aufbau des Haupttransformators 42 ist ebenfalls stark vereinfacht dargestellt. Gezeigt sind ein Magnetkern 48 und eine Primärwicklung 44, an der eine Primärspannung anliegt. Ferner gezeigt sind Sekundärwicklungen 46, an denen eine (transformierte) Sekundärspannung anliegt. Bei der Zuordnung der Begriffe primär und sekundär wird von einem Hauptbetriebszustand des Haupttransformators 42 ausgegangen, bei dem über den Stromabnehmer 30 aufgenommene elektrische Energie primärseitig bereitgestellt ist und zur weiteren Verwendung innerhalb des Schienenfahrzeugs 10 in eine sekundärseitige Spannung gewandelt wird.

An jeder der Sekundärwicklungen 46 ist ferner ein Stromrichter angeschlossen, nämlich ein erster Stromrichter 50 und ein weiterer Stromrichter 52. Beide Stromrichter 50, 52 die auch als Netzstromrichter bezeichnet werden können, sind wahlweise als Gleichrichter oder als Wechselrichter betreibbar und mit einem Gleichspannungs-Zwischenkreis 51 verbunden. Mit diesem Gleichspannungs-Zwischenkreis 51 sind auch Traktionsmotoren 56 verbunden, die wahlweise motorisch oder generatorisch betrieben werden können. Zwischen dem Gleichspannungs-Zwischenkreis 51 und den Traktionsmotoren 56 ist jeweils ein Motorstromrichter 54 geschaltet, der wiederum wahlweise als Gleichrichter (für den generatorischen Betrieb) oder als Wechselrichter (für den motorischen Betrieb) betreibbar ist.

Mit dem Gleichspannungs-Zwischenkreis 51 sind auch nicht näher dargestellte Hilfsbetriebe 58 über ein Bordnetz 57 verbunden. Es ist auch möglich, alternativ zu der Variante aus Figur 2 die Hilfsbetriebe 58 über eine separate Sekundärwicklung 46 und unabhängig von dem Gleichspannung-Zwischenkreis 51, an den auch die Traktionsmotoren 56 angeschlossen sind, mit elektrischer Energie zu versorgen. Auch dann würde aber wenigstens ein weiterer Stromrichter 52 zwischen dieser Sekundärwicklung 56 und den Hilfsbetrieben 58 vorhanden sein und in der nachstehend erläuterten Weise betrieben werden.

Wenn der Stromabnehmer 20 mit einem spannungsführenden Fahrdrahtabschnitt 18 in Kontakt steht und der Hauptschalter 38, wie während der Fahrt allgemein der Fall, geschlossen ist, liegt die einphasige Wechselspannung der Stromversorgung 15 primärseitig an dem Haupttransformator 42 an (abzüglich hierin nicht näher betrachtete Leitungsverluste). Der Haupttransformator 42 wandelt diese Spannung in eine sekundärseitige Spannung um, die typischerweise niedriger ist.

Weiter werden in diesem Fall bevorzugt beide der Stromrichter 50, 52 als Gleichrichter betrieben und speisen den Gleichspannungs-Zwischenkreis 51 mit elektrischer Energie, die von dem Haupttransformator 42 bereitgestellt wird. Der Gleichspannungs-Zwischenkreis 51 speist die Motorstromrichter 54, die Wechselspannung für den motorischen Betrieb der Traktionsmotoren 56 erzeugen. Außerdem werden die Hilfsbetriebe 58 aus dem Gleichspannungs-Zwischenkreis 51 gespeist.

Gelangt der Stromabnehmer 30 nun in den neutralen Abschnitt einer Phasen-Trennstelle 22, würde gemäß Stand der Technik bereits im Vorfeld die Traktionskraft automatisch oder manuell gedrosselt werden, würde der Hauptschalter 38 geöffnet und würden die Stromrichter 50, 52 gesperrt werden. Dies bringt die einleitend diskutierten Nachteile mit sich.

In dem gezeigten Ausführungsbeispiel ist stattdessen vorgesehen, nach bevorzugt ebenfalls durchgeführter automatischer oder manueller Rücknahme der Traktionsleistung den Hauptschalter 38 auch beim Passieren einer Phasen-Trennstelle 22 geschlossen zu halten.

Primärseitig liegt am Haupttransformator 42 dann typischerweise keine Spannung an, wie dies beim bisherigen Öffnen des Hauptschalters 38 auch der Fall ist. Um die hiervon ausgehenden Instabilitäten des Magnetfelds des Haupttransformators 42 zu kompensieren, ist erfindungsgemäß aber vorgesehen, dass der erste Stromrichter 50 beim Durchfahren der Phasen-Trennstelle 22 eine Wechselspannung erzeugt, die an der entsprechenden Sekundärwicklung 46 des Haupttransformators 42 anliegt. Prinzipiell wäre dies auch bei geöffnetem Hauptschalter 38 möglich. Hierüber wird das Magnetfeld 42 zumindest teilweise definiert aufrechterhalten und wird auch eine primärseitige Spannung an der Primärwicklung 44 induziert. Wie geschildert, wird hierdurch vermieden, dass der Haupttransformator 42 seine Magnetisierung signifikant abbaut, was zu hohen Einschaltströmen bei einem Wiedereinfahren in einen spannungsführenden Fahrdrahtabschnitt 18 führen würde. Auch können hierdurch Resonanzen gedämpft werden.

Zur Energieversorgung des ersten Stromrichters 50 aus dem Gleichspannungs-Zwischenkreis 51 wird wenigstens einer der Traktionsmotoren 56 generatorisch betrieben und wandelt die Traktionsenergie des weiterrollenden Schienenfahrzeugs 10 in elektrische Energie um (Stützbremsbetrieb). Der zugeordnete Motorstromrichter 54 wird dann als Gleichrichter betrieben.

Weiter sieht das Ausführungsbeispiel bevorzugt vor, die sekundärseitige Wechselspannung derart zu erzeugen, dass die primärseitige Spannung des Haupttransformators 42 mit der Phasenlage der Spannung im vorausliegenden Fahrbahnabschnitt 18 synchronisiert ist. Hierfür kann die Steuereinrichtung 21 von der Phasendetektionseinrichtung 31 Signale betreffend eine detektierte vorausliegende Phasenlage erhalten und den ersten Stromrichter 50 entsprechend ansteuern. Mittels dieser Synchronisation können hohe Ausgleichsströme beim Einfahren in den vorausliegenden Fahrdrahtabschnitt 18 verhindert werden.

Zusätzlich oder alternativ können hinterlegte Informationen zu den Phasenlagen in einzelnen Fahrbahnabschnitten 18 zum Beispiel aus der Speichereinrichtung 34 ausgelesen werden und kann die Steuereinrichtung 32 darauf basierend den ersten Stromrichter 50 entsprechend ansteuern. Hierfür kann die Steuereinrichtung 32 eine Ortserkennung vornehmen, zum Beispiel anhand von GPS-Signalen oder anhand von Positionsmarkierungen, wie sie von ATC-Systemen automatisch erkennbar sind. Auch die Kombination von GPS- und Dopplerradar-Signalen sowie etwaige Synchronisationen hierzwischen mittels fahzeugmontierter (GSM) Antennen sind im Stand der Technik bekannt (sh. z.B. bei Level 2 und 3 des ETCS (European Train Control System)-Standards) Auf diese Weise kann dann der aktuelle und/oder der vorausliegende Fahrdrahtabschnitt 18 identifiziert werden und können für diesen Fahrdrahtabschnitt 18 hinterlegte oder abrufbare Informationen zur Phasenlage ermittelt werden.

Der Vollständigkeit halber sind in Figur 2 auch wieder die Steuereinrichtung 32 und die Speichereinrichtung 34 eingetragen. Ferner sind strichliert beispielhafte Kommunikationsverbindungen gezeigt, die auch über einen Fahrzeugbus bereitgestellt werden könnten. Die Steuereinrichtung 32 kann prinzipiell dazu eingerichtet sein, über die Kommunikationsverbindungen Steuersignale an jeden der erwähnten Stromrichter 50, 52, 54 und optional auch den Hauptschalter 38 auszugeben, um diese Komponenten in der hierin geschilderten Weise zu betreiben. Über den Oberspannungswandler 40 aber auch die Detektionseinrichtung 31 kann die Steuereinrichtung 32 ferner Messsignale erhalten. Eine weitere Alternative, bei der eine vorausliegende Phasenlage lediglich vermutet wird, in der Annahme, dass diese sich von der gerade durchfahrenen Phasenlage unterscheidet, wird im allgemeinen Beschreibungsteil erläutert.

Weiter ist erfindungsgemäß vorgesehen, dass der weitere Stromrichter 52 ebenfalls nicht gesperrt wird, sondern als ein Gleichrichter betrieben und von dem Haupttransformator 42 gespeist wird. Genauer gesagt wandelt dieser weitere Stromrichter 52 eine an der zugeordneten Sekundärwicklung 46 anliegende Sekundärspannung um und speist damit den Gleichspannungs-Zwischenkreis 51. Hierüber können dann die Hilfsbetriebe 58 weiter betrieben werden, obwohl aufgrund der Phasen-Trennstelle 22 keine ausreichende Energieversorgung durch die Stromversorgung 15 vorliegt.

Bildlich gesprochen werden also die Hilfsbetriebe 58 mittels eines Energieflusses versorgt, der über ersten Stromrichter 50, den Haupttransformator 42 und den weiteren Stromrichter 52 verläuft. Hierdurch wird der Haupttransformator 42 weiter stabilisiert und werden insbesondere Resonanzen des Magnetfeldes besonders effektiv gedämpft, die aufgrund der Änderung primärseitigen Spannung 44 auftreten könnten.

Optional wäre es auch möglich, einen der Traktionsmotoren 56 motorisch zu betreiben, um die elektrische Last zu erhöhen, die der Haupttransformator 42 versorgen muss. Dies ist insbesondere dann relevant, wenn die elektrische Last in Form der Hilfsbetriebe 58 unterhalb einer gewünschten Mindestlast liegt. Dies kann durch die Steuereinrichtung 32 des Schienenfahrzeugs 10 überprüft und bedarfsweise aktiviert werden.

Die Auswirkungen dieses Vorgehens verdeutlichen sich aus den Diagrammen von Figur 3. In dem oberen Diagramm ist ein Geschwindigkeitsverlauf V über eine Zeitachse t aufgetragen, der bei dem Durchfahren einer Phasen-Trennstelle 22 auftritt. In dem unteren Diagramm ist ein Verlauf der Traktionsleistung T über eine Zeitachse t aufgetragen, der bei dem Durchfahren einer Phasen-Trennstelle 22 auftritt. Mit durchgezogenen Linie sind dabei jeweils die Verläufe gezeigt, die mit der erfindungsgemäßen Lösung erhalten werden. Strichliert sind Verläufe gezeigt, die mit den bisherigen Ansätzen gemäß Stand der Technik erhalten werden, bei denen das Antriebssystem 36 elektrisch abgeschaltet wird und insbesondere keine Spannungsversorgung des Haupttransformators 42 mehr erfolgt.

In dem oberen Diagramm erkennt man bezugnehmend auf die durchgezogene Linie, dass der Stromabnehmer 20 des Schienenfahrzeugs 10 zu einem Zeitpunkt T1 eine Phasen-Trennstelle 22 erreicht und ab dann die Energieaufnahme aus der Stromversorgung 15 unterbrochen ist. Die Geschwindigkeit beginnt sich daraufhin zu verringern, da automatisch per fahrerautonomer ATC-Steuerung die Traktionsleistung zurückgefahren wird. Zu einem Zeitpunkt T2 wird das Ende der Phasen-Trennstelle 22 erreicht und wird dann wieder begonnen, (ebenfalls bevorzugt per fahrerautonomer ATC-Steuerung) die Traktionsleistung hochzufahren. Das Schienenfahrzeug 10 erreicht in der Folge zum Zeitpunkt T3 wieder die ursprüngliche Geschwindigkeit vor der Phasen-Trennstelle 22.

Eine Zustandserkennung, die das Einfahren und Ausfahren aus einer Phasen-Trennstelle 22 ermöglicht, kann mittels der Detektionseinrichtung 31 erfolgen oder aber durch Spannungsmessungen mit dem Oberspannungswandler 40 aus Figur 1. Diese Komponenten können entsprechende Signale an die Steuereinrichtung 32 übermitteln, die daraufhin die geschilderten Maßnahmen einleitet. Allgemein und nicht beschränkt auf die Details des Ausführungsbeispiels kann die Steuereinrichtung 32 des Schienenfahrzeugs 10 jegliche hierin geschilderten ATC-Funktionen ausführen und/oder bereitstellen.

Im Gegensatz dazu erkennt man bei dem strichlierten Verlauf gemäß Stand der Technik, dass bereits vor dem Erreichen der Phasen-Trennstelle 22 zu einem Zeitpunkt T0 ein Geschwindigkeitsabfall eintritt, da vorausschauend der Hauptschalter 38 geöffnet wird. Zudem setzt sich die Verlangsamung bis über den Zeitpunkt T3 und das Verlassen der Phasen-Trennstelle 22 hinaus fort, da dann zunächst der Hauptschalter 38 wieder geschlossen werden muss und auch weitere einleitend geschilderte Maßnahmen vor der Wiederaufnahme einer Traktionsenergieerzeugung getroffen werden müssen. Erst zu einem deutlich späteren Zeitpunkt T5 wird deshalb wieder die ursprüngliche Geschwindigkeit erreicht.

Man erkennt also, dass die erfindungsgemäße Lösung erhebliche Vorteile hinsichtlich der Fahrdynamik bietet, da die Zeitdauer (T1-T3) ohne Traktionsenergieerzeugung deutlich kürzer ausfällt als im Stand der Technik (T0-T5). Als Konsequenz fällt auch eine minimale Geschwindigkeit (bei T2) geringer als im Stand der Technik aus (bei T4) und die ursprüngliche Geschwindigkeit wird früher wieder erreicht (siehe T3 gegenüber T5).

Im unteren Diagramm von Figur 3 sind bezugnehmend auf die gleichen Zeitpunkte T0-T4 Verläufe der vom Schienenfahrzeug 10 erzeugten Traktionsleistung T gezeigt. Zum Zeitpunkt T1 (Erreichen der Phasen-Trennstelle 22), ggf. aber auch bereits etwas früher, wird bei dem erfindungsgemäßen durchgezogenen Verlauf begonnen, die Traktionsleistung T abzubauen, und zwar bevorzugt nur stufenweise bzw. graduell, um ruckhafte Verlangsamungen und das Auftreten von Überspannungen zu begrenzen. Dies wird bis zum Erreichen des Endes der Phasen-Trennstelle 22 zum Zeitpunkt T2 fortgesetzt bzw. aufrechterhalten. Ab diesem Zeitpunkt T2 wird aufgrund der geeignet eingestellten primärseitigen Phasenlage dann unmittelbar wieder begonnen, die Traktionsleistung T zu erhöhen. Die Traktionsleistung T kann auf Null oder einen deutlich reduzierten Wert zurückgefahren werden, wobei in Fig. 3 unten nur aus Darstellungsgründen ein Abstand zur unteren Achse gewahrt ist.

Bei der strichlierten Linie gemäß Stand der Technik wird erneut bereits vor dem Erreichen der Phasen-Trennstelle 22 zum Zeitpunkt T0 der Hauptschalter 38 geöffnet und daher frühzeitig begonnen, die Traktionsleistung T herunterzufahren. Erst zum Zeitpunkt T4 wird dann die Traktionsleistung wieder hochgefahren, wobei dieser Zeitpunkt T4 deutlich hinter dem Zeitpunkt T2 des Erreichens des Endes der Phasen-Trennstelle 22 liegt. Grund sind Zeitverzögerung, da das erneute Anliegen einer Spannung erkannt werden muss, anschließend der geöffnete Hauptschalter 38 erst wieder geschlossen werden muss und die vormals gesperrten Stromrichter 50, 52 dann erst wieder angetaktet werden können.

Auch hieraus verdeutlicht sich der Dynamikverlust des Schienenfahrzeugs 10 beim Passieren einer Phasen-Trennstelle 22 im Vergleich zu der erfindungsgemäßen Lösung.

Abschließend wird in Figur 4 ein Ablaufschema eines erfindungsgemäßen Verfahrens unter Bezugnahme auf die Figuren 1 bis 3 erläutert. Die geschilderte Schrittfolge legt dabei keine zwingende zeitliche Reihenfolge fest, sofern nicht anders angegeben oder ersichtlich.

In einem Schritt S1 wird das Erreichen einer Phasen-Trennstelle 22 erkannt, zum Beispiel fahrerautonom durch die Steuereinrichtung 32 in Zusammenwirkung mit der Detektionseinrichtung 31 und/oder durch Messen der anliegenden Spannung mit dem Oberspannungswandler 40.

In einem Schritt S2 wird der Hauptschalter 38 geschlossen gehalten. Dies kann umfassen, dass die Steuereinrichtung 32 eine entsprechende Öffnungs-Signalausgabe durch andere Steuereinrichtungen unterdrückt oder dass prinzipiell keine entsprechende Öffnungs-Signalerzeugung erfolgt. Der Schritt S2 ist somit nicht zwingend mit einer tatsächlich durchgeführten Aktion verbunden.

In einem Schritt S3 wird daraufhin der erste Stromrichter 50 als Wechselrichter betrieben (zum Beispiel unter Ansteuerung durch die Steuereinrichtung 32) und aus dem Gleichspannungs-Zwischenkreis 51 gespeist. Die erzeugte Wechselspannung liegt sekundärseitig am Haupttransformator 42 an und resultiert in einer primärseitigen Spannung. Wie geschildert, wird die Wechselspannung dabei derart erzeugt, dass eine Phasenlage der resultierenden primärseitigen Spannung mit einer bekannten, vermuteten und/oder detektierten Phasenlage des vorausliegenden Fahrdrahtabschnitts 18 möglichst synchronisiert ist.

Gemäß einer Ausführungsform ist es auch möglich, zum Beispiel mit dem Oberspannungswandler 40, der aufgrund des Geschlossenhaltens des Hauptschalters 38 nach wie für ein Messen der primärseitigen Spannung verwendbar ist, die primärseitig erzeugte Spannung zu messen und den Betrieb des ersten Stromrichters 50 bzw. die hiervon erzeugte Wechselspannung geeignet anzupassen. Hierdurch kann zum Beispiel die gewünschte Phasenlage der Primärspannung sichergestellt werden.

In einem Schritt S4, der auch vor oder gleichzeitig zu dem Schritt S3 ausgeführt werden kann, wird dann mit dem weiteren Stromrichter 52 in der vorstehend geschilderten Weise eine elektrische Last an den Haupttransformator 42 angelegt.

In einem Schritt S5 wird das Verlassen der Phasen-Trennstelle 22 registriert (beispielsweise erneut mittels der Detektionserrichtung 31 oder dem Oberspannungswandler 40). Der erste Stromrichter 50 wird dann wieder als Gleichrichter betrieben und die Traktionsleistung T des Schienenfahrzeugs 10 wird bevorzugt fahrerautonom hochgefahren.

Aufgrund der aufrechterhaltenen Magnetisierung des Haupttransformators 42 treten im Schritt S5 keine signifikanten Einschaltströme auf. Zudem verhindert die erfolgte Synchronisation der Phasenlage der Primärspannung mit der Phasenlage nach der Phasen-Trennstelle 22 hohe Ausgleichsströme. Weiter werden durch das Geschlossenhalten des Hauptschalters 38 Zeitverluste vermieden, die mit einem Öffnen und erneuten Schließen einhergehen würden. Auch wird der Hauptschalter 38 durch ausbleibende Öffnungs- und Schließvorgänge weniger belastet und erfährt einen geringeren Verschleiß.

## Patentansprüche

1. Verfahren zum Betreiben eines Schienenfahrzeugs (10) beim Passieren von Trennstellen (22) in einer fahrzeugexternen Stromversorgung (15), wobei das Schienenfahrzeug (10) umfasst:
- wenigstens einen Stromabnehmer (30) zum Aufnehmen elektrischer Energie von der Stromversorgung (15);
- einen Haupttransformator (42) zum Transformieren der aufgenommenen elektrischen Energie, die an einer Primärseite des Haupttransformators (42) bereitgestellt ist, auf ein gewünschtes Spannungsniveau an einer Sekundärseite des Haupttransformators (42);
- einen ersten Stromrichter (50), der wahlweise als Gleichrichter zum Gleichrichten einer von dem Haupttransformator (42) transformierten Spannung für das Versorgen eines Gleichspannungs-Zwischenkreises (51) des Schienenfahrzeugs betreibbar ist oder als Wechselrichter zur elektrischen Energieversorgung des Haupttransformators (42) mit Energie aus einem Gleichspannungs-Zwischenkreis (51) betreibbar ist; und
- einen weiteren Stromrichter (52), der als Gleichrichter betreibbar und von dem Haupttransformator mit elektrischer Energie speisbar ist;
wobei das Verfahren umfasst:
- Anlegen einer Wechselspannung an die Sekundärseite des Haupttransformators (42) durch den als Wechselrichter betriebenen ersten Stromrichter (50), während das Schienenfahrzeug (10) eine Trennstelle (22) der Stromversorgung (15) passiert,
**dadurch gekennzeichnet, dass**
während des Passierens der Trennstelle (22) der weitere Stromrichter (52) als Gleichrichter betrieben und von dem Haupttransformator (42) mit elektrischer Energie gespeist wird.

2. Verfahren nach Anspruch 1,
wobei das Schienenfahrzeug (10) ferner einen Hauptschalter (38) umfasst, der dazu eingerichtet ist, bei einem Öffnen eine elektrische Verbindung zwischen dem Stromabnehmer (30) und dem Haupttransformator (42) zumindest temporär zu trennen, und wobei das Verfahren umfasst:
- Geschlossenhalten des Hauptschalters (38) während eines Passierens einer Trennstelle (22).

3. Verfahren nach Anspruch 1 oder 2,
wobei eine an der Primärseite anliegende Spannung gemessen und darauf basierend die Wechselspannung an der Sekundärseite angepasst wird.

4. Verfahren nach einem der vorangehenden Ansprüche,
wobei die Wechselspannung derart erzeugt wird, dass eine Phasenlage der Spannung an der Primärseite gegenüber einer Phasenlage der Spannung an der Primärseite vor dem Passieren der Trennstelle (22) verändert wird.

5. Verfahren nach Anspruch 4,
wobei die geänderte Phasenlage einer Phasenlage der Stromversorgung (15) nach der Trennstelle (22) entspricht oder eine Phasendifferenz zu dieser Phasenlage nach der Trennstelle (22) eine zulässige Maximaldifferenz nicht überschreitet.

6. Verfahren nach einem der Ansprüche 1 bis 5,
wobei während eines Passierens einer Trennstelle (22) ein Stützbremsbetrieb aktiviert wird, um dem Gleichspannungs-Zwischenkreis (51) Energie zuzuführen.

7. Verfahren nach einem der vorangehenden Ansprüche,
wobei die Wechselspannung derart erzeugt wird, dass eine Magnetisierung des Haupttransformators (42) während des Passierens der Trennstelle (22) reduziert wird und/oder einen zulässigen Maximalwert nicht überschreitet.

8. Schienenfahrzeug (10), mit:
- wenigstens einem Stromabnehmer (30) zum Aufnehmen elektrischer Energie von einer fahrzeugexternen Stromversorgung (15);
- einem Haupttransformator (42), zum Transformieren der aufgenommenen elektrischen Energie, die an einer Primärseite des Haupttransformators (42) bereitgestellt ist, auf ein gewünschtes Spannungsniveau an einer Sekundärseite des Haupttransformators (42);
- einem ersten Stromrichter (50), der wahlweise als Gleichrichter zum Gleichrichten einer von dem Haupttransformator (42) transformierten Spannung für das Versorgen eines Gleichspannungs-Zwischenkreises (51) des Schienenfahrzeugs betreibbar ist oder als Wechselrichter zur elektrischen Energieversorgung des Haupttransformators (42) mit Energie aus dem Gleichspannungs-Zwischenkreis (51) betreibbar ist;
- einem weiteren Stromrichter (52), der als Gleichrichter betreibbar und von dem Haupttransformator mit elektrischer Energie speisbar ist;
- einer Steuereinrichtung (32), wobei die Steuereinrichtung (32) dazu eingerichtet ist, den ersten Stromrichter (50) derart anzusteuern, dass dieser während des Passierens der Trennstelle (22) als Wechselrichter betrieben wird und die an der Sekundärseite anliegende Wechselspannung erzeugt
**dadurch gekennzeichnet, dass**
die Steuereinrichtung (32) ferner dazu eingerichtet ist, den weiteren Stromrichter derart anzusteuern, dass dieser während des Passierens der Trennstelle (22) als Gleichrichter betrieben und von dem Haupttransformator (42) mit elektrischer Energie gespeist wird.

## Claims

1. Method for operating a rail vehicle (10) when passing through separation locations (22) in a vehicle-external power supply (15),
wherein the rail vehicle (10) comprises:
- at least one current collector (30) for receiving electrical energy from the power supply (15);
- a main transformer (42) for transforming the received electrical energy provided on a primary side of the main transformer (42) to a desired voltage level on a secondary side of the main transformer (42);
- a first current converter (50), which can be operated either as a rectifier for rectifying a voltage transformed by the main transformer (42) for supplying power to a DC voltage link (51) of the rail vehicle or as an inverter for supplying electrical energy to the main transformer (42) from a DC voltage link (51); and
- a further current converter (52), which can be operated as a rectifier and can be fed with electrical energy by the main transformer;
wherein the method comprises:
- applying an alternating voltage to the secondary side of the main transformer (42) by means of the first current converter (50) operated as a rectifier when the rail vehicle (10) passes through a separation location (22) of the power supply (15),
**characterized in that**,
when said rail vehicle passes through the separation location (22), the further current converter (52) is operated as a rectifier and is fed with electrical energy by the main transformer (42).

2. Method according to claim 1,
wherein the rail vehicle (10) further comprises a main switch (38), which is configured to at least temporarily disconnect an electrical connection between the current collector (30) and the main transformer (42) when it opens, and wherein
the method comprises:
- keeping the main switch (38) closed when said rail vehicle passes through a separation location (22).

3. Method according to claim 1 or 2,
wherein a voltage applied to the primary side is measured and, on the basis thereof, the alternating voltage is adjusted on the secondary side.

4. Method according to any one of the preceding claims,
wherein the alternating voltage is generated such that a phase position of the voltage on the primary side is modified compared with a phase position of the voltage on the primary side before said rail vehicle passes through the separation location (22).

5. Method according to claim 4,
wherein the modified phase position corresponds to a phase position of the power supply (15) after the separation location (22) or a phase difference from this phase position after the separation location (22) does not exceed a permissible maximum difference.

6. Method according to any one of claims 1 to 5,
wherein, when said rail vehicle passes through a separation location (22), support braking operation is activated in order to supply energy to the DC voltage link (51).

7. Method according to any one of the preceding claims,
wherein the alternating voltage is generated such that magnetization of the main transformer (42) is reduced when said rail vehicle passes through the separation location (22) and/or does not exceed a permissible maximum value.

8. Rail vehicle (10) comprising:
- at least one current collector (30) for receiving electrical energy from an vehicle-external power supply (15);
- a main transformer (42) for transforming the received electrical energy provided on a primary side of the main transformer (42) to a desired voltage level on a secondary side of the main transformer (42);
- a first current converter (50), which can be operated either as a rectifier for rectifying a voltage transformed by the main transformer (42) for supplying power to a DC voltage link (51) of the rail vehicle or as an inverter for supplying electrical energy to the main transformer (42) from the DC voltage link (51);
- a further current converter (52), which can be operated as a rectifier and can be fed with electrical energy by the main transformer;
- a controller (32), wherein the controller (32) is configured to control the first current converter (50) such that, when said rail vehicle passes through the separation location (22), it is operated as an inverter and generates the alternating voltage applied to the secondary side,
**characterized in that**
the controller (32) is further configured to control the further current converter such that, when said rail vehicle passes through the separation location (22), it is operated as a rectifier and is fed with electrical energy by the main transformer (42).

## Revendications

1. Procédé de fonctionnement d'un véhicule ferroviaire (10) lors du passage de points de déconnexion (22) dans une alimentation en courant (15) externe au véhicule, dans lequel le véhicule ferroviaire (10) comporte :
- au moins un pantographe (30) pour la réception de l'énergie électrique de l'alimentation en courant (15) ;
- un transformateur principal (42) pour la transformation de l'énergie électrique reçue qui est fournie sur un côté primaire du transformateur principal (42), à un niveau de tension souhaité sur un côté secondaire du transformateur principal (42) ;
- un premier convertisseur (50) qui peut fonctionner au choix comme redresseur pour le redressage d'une tension transformée par le transformateur principal (42) pour l'alimentation d'un circuit intermédiaire de tension continue (51) du véhicule ferroviaire ou peut fonctionner comme onduleur pour l'alimentation en énergie électrique du transformateur principal (42) en énergie d'un circuit intermédiaire de tension continue (51) ; et
- un autre convertisseur (52) qui peut fonctionner comme redresseur et peut être alimenté en énergie électrique par le transformateur principal ;
dans lequel le procédé comporte :
- l'application d'une tension alternative au côté secondaire du transformateur principal (42) par le premier convertisseur (50) fonctionnant comme onduleur alors que le véhicule ferroviaire (10) passe un point de déconnexion (22) de l'alimentation en courant (15),
**caractérisé en ce que**
pendant le passage du point de déconnexion (22) l'autre convertisseur (52) fonctionne comme redresseur et est alimenté en énergie électrique par le transformateur principal (42).

2. Procédé selon la revendication 1,
dans lequel le véhicule ferroviaire (10) comporte de plus un commutateur principal (38) qui est conçu afin de séparer au moins temporairement lors d'une ouverture une liaison électrique entre le pantographe (30) et le transformateur principal (42) et dans lequel le procédé comporte :
- le maintien fermé du commutateur principal (38) pendant un passage d'un point de déconnexion (22).

3. Procédé selon la revendication 1 ou 2,
dans lequel une tension appliquée au côté primaire est mesurée et sur cette base, la tension alternative est adaptée au côté secondaire.

4. Procédé selon l'une quelconque des revendications précédentes,
dans lequel la tension alternative est générée de telle manière qu'une position de phase de la tension sur le côté primaire soit modifiée par rapport à une position de phase de la tension sur le côté primaire avant le passage du point de déconnexion (22).

5. Procédé selon la revendication 4,
dans lequel la position de phase modifiée correspond à une position de phase de l'alimentation en courant (15) après le point de déconnexion (22) ou une différence de phase par rapport à cette position de phase après le point de déconnexion (22) ne dépasse pas une différence maximale autorisée.

6. Procédé selon l'une quelconque des revendications 1 à 5,
dans lequel pendant un passage d'un point de déconnexion (22), un mode de freinage d'appui est activé afin d'amener de l'énergie au circuit intermédiaire de tension continue (51).

7. Procédé selon l'une quelconque des revendications précédentes,
dans lequel la tension alternative est générée de telle manière qu'une magnétisation du transformateur principal (42) soit réduite pendant le passage du point de déconnexion (22) et/ou ne dépasse pas une valeur maximale autorisée.

8. Véhicule ferroviaire (10) avec :
- au moins un pantographe (30) pour la réception d'énergie électrique d'une alimentation en courant (15) externe au véhicule ;
- un transformateur principal (42) pour la transformation de l'énergie électrique reçue qui est fournie au niveau d'un côté primaire du transformateur principal (42), à un niveau de tension souhaité sur un côté secondaire du transformateur principal (42) ;
- un premier convertisseur (50) qui peut fonctionner au choix comme redresseur pour le redressage d'une tension transformée par le transformateur principal (42) pour l'alimentation d'un circuit intermédiaire de tension continue (51) du véhicule ferroviaire ou peut fonctionner comme onduleur pour l'alimentation en énergie électrique du transformateur principal (42) en énergie du circuit intermédiaire de tension continue (51),
- un autre convertisseur (52) qui peut fonctionner comme redresseur et peut être alimenté en énergie électrique par le transformateur principal ;
- un dispositif de commande (32), dans lequel le dispositif de commande (32) est conçu afin de commander le premier convertisseur (50) de telle manière que celui-ci fonctionne pendant le passage du point de déconnexion (22) comme onduleur et génère la tension alternative appliquée au côté secondaire,
**caractérisé en ce que**
le dispositif de commande (32) est de plus conçu afin de commander l'autre convertisseur de telle manière que celui-ci fonctionne pendant le passage du point de déconnexion (22) comme redresseur et soit alimenté en énergie électrique par le transformateur principal (42).
